# EUROPEAN PATENT APPLICATION

(11) **EP 4 510 642 A1**
(43) Date of publication of application: **19.02.2025**
(21) Application number: 23794778.3
(22) Date of filing: 07.03.2023
(51) Int. Cl.: H04W 4/029, H04W 80/08

(54) **COMMUNICATION METHOD AND RELATED APPARATUS**

(30) Priority: 29.04.2022 CN 202210469102
(71) Applicant: Huawei Technologies Co., Ltd., Shenzhen, Guangdong 518129 (CN)
(72) Inventor: ZHU, Fangyuan, Shenzhen, Guangdong 518129 (CN); XU, Shengfeng, Shenzhen, Guangdong 518129 (CN)
(74) Representative: Körber, Martin Hans
(86) International application number: PCT/CN2023/080004
(87) International publication number: WO 2023/207342

(57) **Abstract**

A communication method and a related apparatus are provided. The method includes: An LMF serving a terminal device receives measurement data of a first positioning procedure, where the measurement data of the first positioning procedure includes information about a first cell, the first cell is a cell of a mobile relay, and the mobile relay has mobility; obtains first information, where the first information is associated with the mobile relay; sends a first request message based on the first information, where the first request message is used to trigger a second positioning procedure for the mobile relay; receives location information of the mobile relay, where the location information of the mobile relay is determined based on the second positioning procedure; and determines a location of the terminal device based on the location information of the mobile relay and the measurement data of the first positioning procedure. This resolves a problem that the LMF cannot calculate the location of the terminal device because a location of the cell is not fixed, and helps accurately calculate the location of the terminal device.

## Description

This application claims priority to Chinese Patent Application No. 202210469102.2, filed with the China National Intellectual Property Administration on April 29, 2022 and entitled "COMMUNICATION METHOD AND RELATED APPARATUS", which is incorporated herein by reference in its entirety.

### TECHNICAL FIELD

This application relates to the communication field, and in particular, to a communication method and a related apparatus.

### BACKGROUND

With development of communication technologies, a relay device is widely applied. During research on a 5th generation (5th generation, 5G) mobile communication system, that is, new radio (new radio, NR), an integrated access and backhaul (integrated access and backhaul, IAB) node integrating a wireless access link and a wireless backhaul link is proposed. The IAB node accesses a base station serving the IAB node via a wireless interface in a manner similar to that of a terminal, the base station is referred to as a donor base station (donor base station), and a wireless interface link between the IAB node and the donor base station is referred to as a backhaul link (backhaul link). The IAB node provides a function and a service similar to those of a common base station for a terminal accessing a cell of the IAB node, and a communication link between the IAB node and the terminal is referred to as an access link (access link). Generally, the IAB node is fixed on the ground or in a building, and has no mobility.

In an existing positioning technology, regardless of a terminal device assisted positioning procedure (UE assisted positioning procedure) or a network assisted positioning procedure (network assisted positioning procedure), positioning measurement data of a terminal device is related to a cell, and a location management function (location management function, LMF) determines a location of the terminal device based on a cell identifier (cell identifier, Cell ID) included in the measurement data and prestored location information of the cell.

However, as a mobile relay is widely applied, the terminal device may access a network by accessing the mobile relay, and move with the mobile relay. In this case, as the mobile relay moves, a location of a cell of the mobile relay is not fixed. Therefore, even if the LMF obtains the cell identifier, the LMF still cannot determine the location of the terminal device.

Therefore, a method needs to be urgently provided, so that the LMF can accurately determine the location of the terminal device.

### SUMMARYS

This application provides a communication method and a related apparatus, so that a network side can accurately determine a location of a terminal device.

According to a first aspect, this application provides a communication method. The method may be performed by an LMF, or may be performed by a component (such as a chip or a chip system) configured in the LMF, or may be implemented by a logical module or software that can implement all or some functions of the LMF. This is not limited in this application.

The LMF serves a terminal device. That the LMF serves a terminal device means that the LMF is responsible for calculating or determining a location of the terminal device based on positioning measurement data of the terminal device.

For example, the method includes: receiving measurement data of a first positioning procedure, where the measurement data of the first positioning procedure includes information about a first cell, the first cell is a cell of a mobile relay, and the mobile relay has mobility; obtaining first information, where the first information is associated with the mobile relay; sending a first request message based on the first information, where the first request message is used to trigger a second positioning procedure for the mobile relay; receiving location information of the mobile relay, where the location information of the mobile relay is determined based on the second positioning procedure; and determining the location of the terminal device based on the location information of the mobile relay and the measurement data of the first positioning procedure.

Based on the foregoing technical solution, if the measurement data of the first positioning procedure for the terminal device includes the information about the cell of the mobile relay, the LMF serving the terminal device further obtains the first information associated with the mobile relay, where, for example, the first information obtained by the LMF serving the terminal device may be an identifier of an access and mobility management function (access and mobility management function, AMF) serving the mobile relay (that is, the identifier of the AMF is associated with the mobile relay); and sends the first request message based on the first information, to trigger the positioning procedure for the mobile relay, to obtain the location information of the mobile relay. In this way, the LMF may determine the location of the terminal device based on the location information of the mobile relay and the positioning measurement data of the terminal device. The foregoing solution provides a method for determining the location of the terminal device in a scenario in which the positioning measurement data of the terminal device is associated with the mobile relay, to resolve a problem that the LMF cannot calculate the location of the terminal device because a location of the cell of the mobile relay is not fixed, and help accurately calculate the location of the terminal device.

With reference to the first aspect, in some possible implementations of the first aspect, the information about the first cell includes a cell identifier of the first cell; and the method further includes: determining, based on the cell identifier of the first cell, that the first cell is the cell of the mobile relay.

Optionally, the information about the first cell further includes first indication information, where the first indication information indicates that the first cell is the cell of the mobile relay.

In a possible design, the information about the first cell includes a cell identifier of the first cell, and the LMF may determine, based on the cell identifier, that the first cell is the cell of the mobile relay. In another possible design, the information about the first cell includes a cell identifier and first indication information, where the first indication information indicates that the first cell is the cell of the mobile relay, and the LMF may determine, based on the first indication information, that the first cell is the cell of the mobile relay. This application provides a plurality of methods for the LMF to determine that the first cell is the cell of the mobile relay, to improve flexibility.

With reference to the first aspect, in some possible implementations of the first aspect, the information about the first cell includes first indication information; and the method further includes: determining, based on the first indication information, to trigger the second positioning procedure for the mobile relay.

The information about the first cell may include the first indication information. The LMF may determine, based on the first indication information, to trigger the second positioning procedure for the mobile relay, to obtain the location information of the mobile relay, and determine the location of the terminal device based on the measurement data of the first positioning procedure and the location information of the mobile relay.

With reference to the first aspect, in some possible implementations of the first aspect, the obtaining first information includes: sending a second request message to a first network element, where the second request message includes the cell identifier of the first cell; and receiving a second response message from the first network element, where the second response message includes the first information.

Optionally, the first network element is any one of the following: an access network device, a unified data management (unified data management, UDM), a unified data repository (unified data repository, UDR), or a network repository function (network repository function, NRF).

The LMF may obtain the first information in the following manners.

Manner 1: The LMF obtains, from any one of the UDM, the UDR, or the NRF, the first information associated with the mobile relay, where any one of the foregoing network elements may store the first information. The first information includes at least one of the identifier of the AMF serving the mobile relay and an identifier of the mobile relay.

Manner 2: The LMF obtains the first information from the access network device. The access network device locally stores context information of the mobile relay, where the context information includes a correspondence between the cell identifier of the first cell of the mobile relay and the first information. When receiving the second request message, the access network device may determine, based on the context information of the mobile relay, the first information corresponding to the cell identifier of the first cell. The first information includes the identifier of the AMF.

Manner 3: The first information is obtained from an AMF serving the terminal device. The first information includes at least one of an identifier of an AMF and an identifier of the mobile relay, and the identifier of the AMF is the identifier of the AMF serving the mobile relay.

The foregoing plurality of manners of obtaining the first information is provided, so that flexibility of obtaining the first information by the LMF is improved.

According to a second aspect, this application provides a communication method. The method may be performed by an AMF, or may be performed by a component (such as a chip or a chip system) configured in the AMF, or may be implemented by a logical module or software that can implement all or some functions of the AMF. This is not limited in this application.

The AMF serves a terminal device.

For example, the method includes: determining that a first cell accessed by the terminal device is a cell of a mobile relay, where the mobile relay is configured to provide a relay service between the terminal device and an access network device, and the mobile relay has mobility; obtaining first information, where the first information includes at least one of an identifier of the AMF serving the mobile relay and an identifier of the mobile relay; and sending a first request message to an LMF, where the first request message is used to trigger a first positioning procedure for the terminal device, the first request message includes the first information, and the first information is used to trigger a second positioning procedure for the mobile relay.

Based on the foregoing technical solution, after determining that the first cell accessed by the terminal device is the cell of the mobile relay, the AMF serving the terminal device obtains the first information associated with the mobile relay, and sends the first request message to the LMF serving the terminal device, where the first request message includes the first information, and is used to trigger the first positioning procedure for the terminal device and the second positioning procedure for the mobile relay, so that the LMF serving the terminal device obtains location information of the mobile relay. This resolves a problem that the LMF serving the terminal device cannot calculate a location of the terminal device because a location of the cell of the mobile relay is not fixed, and helps accurately calculate the location of the terminal device.

With reference to the second aspect, in some possible implementations of the second aspect, the determining that a first cell accessed by the terminal device is a cell of a mobile relay includes: receiving a first message from the access network device, where the first message includes an identifier of the first cell accessed by the terminal device and indication information, and the indication information indicates that the first cell is the cell of the mobile relay.

With reference to the second aspect, in some possible implementations of the second aspect, the obtaining first information includes: sending a second request message to a first network element, where the second request message includes the cell identifier of the first cell; and receiving a second response message from the first network element, where the second response message includes the first information.

The AMF may obtain the identifier of the AMF serving the mobile relay and/or the identifier of the mobile relay from the first network element (for example, the first network element may be UDM, a UDR, an NRF, or an access network device). For example, the first network element is the UDM. The AMF sends a second request message to the UDM, where the second request message includes the cell identifier of the first cell. The UDM may determine, based on the cell identifier of the first cell, an identifier of a corresponding AMF serving a mobile relay and an identifier of the mobile relay. Further, the UDM sends, to the AMF serving the terminal device, at least one of the identifier of the AMF serving the mobile relay and the identifier of the mobile relay. Correspondingly, the AMF serving the terminal device receives a second response message from the UDM, where the second response message includes the first information, and the first information includes the at least one of the identifier of the AMF serving the mobile relay and the identifier of the mobile relay.

According to a third aspect, this application provides a communication method. The method may be performed by a terminal device, or may be performed by a component (such as a chip or a chip system) configured in the terminal device, or may be implemented by a logical module or software that can implement all or some functions of the terminal device. This is not limited in this application.

For example, the method includes: receiving location information from a mobile relay, where the location information indicates a location of the mobile relay, and the mobile relay has mobility; performing positioning measurement based on a signal from a cell of the mobile relay, to obtain positioning measurement data; and sending the location information and the positioning measurement data to an LMF, where the location information and the positioning measurement data are used to determine location information of the terminal device.

Based on the foregoing technical solution, the terminal device receives the location information from the mobile relay, performs positioning measurement based on the signal of the cell from the mobile relay, to obtain the positioning measurement data, and sends the location information and the positioning measurement data to the LMF serving the terminal device, so that the LMF serving the terminal device determines a location of the terminal device based on the location information and the positioning measurement data. This resolves a problem that the LMF serving the terminal device cannot calculate the location of the terminal device because a location of the cell of the mobile relay is not fixed, helps accurately calculate the location of the terminal device.

With reference to the third aspect, in some possible implementations of the third aspect, the sending the location information and the positioning measurement data to an LMF includes: sending the location information and the positioning measurement data to the LMF by using an uplink positioning message, where the uplink positioning message further carries a cell identifier of the cell of the mobile relay.

With reference to the third aspect, in some possible implementations of the third aspect, the receiving location information from a mobile relay includes: receiving the location information from the mobile relay from a broadcast message, where the broadcast message carries the location information of the mobile relay.

According to a fourth aspect, this application provides a communication method. The method may be performed by an access network device, or may be performed by a component (such as a chip or a chip system) configured in the access network device, or may be implemented by a logical module or software that can implement all or some functions of the access network device. This is not limited in this application.

For example, the method includes: determining that a first cell accessed by the terminal device is a cell of a mobile relay, where the mobile relay is configured to provide a relay service between the terminal device and an access network device, and the mobile relay has mobility; receiving a first request message from an LMF, where the first request message is used to trigger positioning measurement for the terminal device; obtaining positioning measurement data of the mobile relay, where the positioning measurement data of the mobile relay is used to determine a location of the first cell; and sending a first response message to the LMF, where the first response message includes the positioning measurement data of the mobile relay and positioning measurement data of the terminal device, and the positioning measurement data of the terminal device includes information about the first cell.

Based on the foregoing technical solution, after access network device determines that the first cell accessed by the terminal device is the cell of the mobile relay, when the LMF serving the terminal device initiates this positioning request, the access network device triggers positioning for the mobile relay, to obtain the positioning measurement data of the mobile relay, and reports both the positioning measurement data of the terminal device and the positioning measurement data of the mobile relay to the LMF serving the terminal device, so that the LMF serving the terminal device calculates a location of the terminal device based on the positioning measurement data of the mobile relay and the positioning measurement data of the terminal device. This resolves a problem that the LMF serving the terminal device cannot calculate the location of the terminal device because a location of the cell of the mobile relay is not fixed, and helps accurately calculate the location of the terminal device.

With reference to the fourth aspect, in some possible implementations of the fourth aspect, the determining that a first cell accessed by the terminal device is a cell of a mobile relay includes: determining, based on prestored configuration information and the information about the first cell, that the first cell is the cell of the mobile relay, where the information about the first cell includes a tracking area code (tracking area code, TAC) and/or a cell identifier corresponding to the first cell, the configuration information includes cell information of the mobile relay, the cell information includes a TAC and/or a cell identifier, and the cell information of the mobile relay includes the information about the first cell.

With reference to the fourth aspect, in some possible implementations of the fourth aspect, the determining that a first cell accessed by the terminal device is a cell of a mobile relay includes: receiving first indication information from the mobile relay or the terminal device, where the first indication information indicates that the first cell is a cell having mobility and/or that the mobile relay has mobility.

In a possible design, the access network device prestores the cell information of the mobile relay, including the TAC and/or the cell ID. The access network device compares the information about the first cell with the prestored cell information of the mobile relay, and assuming that the information about the first cell is included in the cell information of the mobile relay, determines that the first cell is the cell of the mobile relay.

In another possible design, the access network device receives first indication information from the mobile relay or the terminal device, where the first indication information indicates that the first cell is a cell having mobility and/or that the mobile relay has mobility. In an example, the terminal device may indicate, to the access network device, that the cell accessed by the terminal device is a cell having mobility. In another example, the mobile relay indicates to the access network device that the mobile relay has mobility. For example, an F1 setup request (F1 setup request) message sent by the mobile relay to the access network device carries indication information indicating that the mobile relay has mobility. In conclusion, in any one of the foregoing manners, the access network device may determine that the first cell accessed by the terminal device is the cell of the mobile relay. This improves flexibility of determining, by the access network device, that the first cell is the cell of the mobile relay.

According to a fifth aspect, this application provides a communication method. The method may be performed by an LMF, or may be performed by a component (such as a chip or a chip system) configured in the LMF, or may be implemented by a logical module or software that can implement all or some functions of the LMF. This is not limited in this application.

The LMF serves a terminal device.

For example, the method includes: obtaining location information of a mobile relay and positioning measurement data of the terminal device, where the mobile relay has mobility, the location information of the mobile relay is used to determine a location of a first cell, the positioning measurement data of the terminal device includes information about the first cell, and the first cell is a cell of the mobile relay; and determining a location of the terminal device based on the location information of the mobile relay and the positioning measurement data of the terminal device.

Based on the foregoing technical solution, the LMF serving the terminal device may obtain the location information of the mobile relay and the positioning measurement data of the terminal device, and determine the location of the terminal device based on the location information of the mobile relay and the positioning measurement data of the terminal device. In this way, even if the cell of the mobile relay is not fixed, the LMF serving the terminal device may also obtain the location information of the mobile relay, to determine the location of the terminal device.

With reference to the fifth aspect, in some possible implementations of the fifth aspect, the obtaining location information of a mobile relay and positioning measurement data of the terminal device includes: receiving the location information of the mobile relay and the positioning measurement data of the terminal device from the terminal device.

With reference to the fifth aspect, in some possible implementations of the fifth aspect, the obtaining location information of a mobile relay and positioning measurement data of the terminal device includes: receiving positioning measurement data of the mobile relay and the positioning measurement data of the terminal device from an access network device; and determining the location information of the mobile relay based on the positioning measurement data of the mobile relay.

The LMF serving the terminal device obtains the location information of the mobile relay. In a possible design, the location information of the mobile relay is directly obtained from the terminal device. In another possible design, the positioning measurement data of the mobile relay is obtained from an access network device, and the location information of the mobile relay is determined based on the positioning measurement data of the mobile relay. This application provides a plurality of possible designs, to improve flexibility of obtaining the location information of the mobile relay by the LMF.

According to a sixth aspect, this application provides a communication method. The method may be performed by a terminal device, or may be performed by a component (such as a chip or a chip system) configured in the terminal device, or may be implemented by a logical module or software that can implement all or some functions of the terminal device. This is not limited in this application.

For example, the method includes: receiving a broadcast message from a cell, where the broadcast message includes first indication information, the first indication information indicates a type of the cell, the type of the cell includes a cell of a mobile relay or a cell of a non-mobile relay, and the mobile relay has mobility; and performing positioning measurement based on a signal of a cell whose type is a cell of a non-mobile relay, where the positioning measurement excludes a cell whose type is a cell of a mobile relay.

Based on the foregoing technical solution, the terminal device screens cells used for the positioning measurement, and performs measurement by using only a signal of a non-mobile cell, to obtain positioning measurement data, so that an LMF serving the terminal device determines location information of the terminal device based on the positioning measurement data. Only the signal of the cell of the non-mobile relay is selected for the positioning measurement, thereby resolving a problem that the LMF fails to determine a location of the terminal device because a location of the cell used for the positioning measurement changes, and helping the LMF accurately calculate the location of the terminal device.

According to a seventh aspect, this application provides a communication apparatus, to implement the method according to any one of the first aspect to the sixth aspect and the possible implementations of the first aspect to the sixth aspect. The apparatus includes a corresponding unit configured to perform the foregoing method. The unit included in the apparatus may be implemented by using software and/or hardware.

According to an eighth aspect, this application provides a communication apparatus. The apparatus includes a processor. The processor is coupled to the memory, and may be configured to execute a computer program in the memory, to implement the method according to any one of the first aspect to the sixth aspect and the possible implementations of the first aspect to the sixth aspect.

According to a ninth aspect, this application provides a computer-readable storage medium. The computer-readable storage medium stores a computer program or instructions, and when the computer program or the instructions are executed, the method according to any one of the first aspect to the sixth aspect or the possible implementations of the first aspect to the sixth aspect is implemented.

According to a tenth aspect, this application provides a computer program product. The computer program product includes instructions, and when the instructions are run, the method according to any one of the first aspect to the sixth aspect and the possible implementations of the first aspect to the sixth aspect is implemented.

According to an eleventh aspect, this application provides a chip system. The chip system includes a processor, may further include a memory, and is configured to implement the method according to any one of the first aspect to the sixth aspect and the possible implementations of the first aspect to the sixth aspect. The chip system may include a chip, or may include a chip and another discrete device.

It should be understood that technical solutions of the seventh aspect to the eleventh aspect of this application correspond to those of the first aspect to the sixth aspect of this application, and beneficial effects achieved by the aspects and the corresponding feasible implementations are similar. Details are not described again.

### BRIEF DESCRIPTION OF DRAWINGS

FIG. 1 is a diagram of an IAB network architecture according to an embodiment of this application;
FIG. 2 is a diagram of a communication procedure based on an IAB technology according to an embodiment of this application;
FIG. 3 is a diagram of a network architecture based on a service-based architecture according to an embodiment of this application;
FIG. 4 is a diagram of a network architecture based on a point-to-point interface according to an embodiment of this application;
FIG. 5 is a diagram of a positioning architecture based on a service-based architecture according to an embodiment of this application;
FIG. 6 is a diagram of a positioning architecture based on a point-to-point interface according to an embodiment of this application;
FIG. 7 is a diagram of a system architecture applicable to a method according to an embodiment of this application;
FIG. 8 is a schematic flowchart of a first communication method according to an embodiment of this application;
FIG. 9A and FIG. 9B are a detailed schematic flowchart of the communication method shown in FIG. 8 according to an embodiment of this application;
FIG. 10A and FIG. 10B are another detailed schematic flowchart of the communication method shown in FIG. 8 according to an embodiment of this application;
FIG. 11 is another schematic flowchart of a first communication method according to an embodiment of this application;
FIG. 12A and FIG. 12B are a detailed schematic flowchart of the communication method shown in FIG. 11 according to an embodiment of this application;
FIG. 13 is still another schematic flowchart of a first communication method according to an embodiment of this application;
FIG. 14 is a detailed schematic flowchart of the communication method shown in FIG. 13 according to an embodiment of this application;
FIG. 15 is yet another schematic flowchart of a first communication method according to an embodiment of this application;
FIG. 16 is a detailed schematic flowchart of the communication method shown in FIG. 15 according to an embodiment of this application;
FIG. 17 is a schematic flowchart of a second communication method according to an embodiment of this application;
FIG. 18 is a detailed schematic flowchart of the communication method shown in FIG. 17 according to an embodiment of this application;
FIG. 19 is a block diagram of a communication apparatus according to an embodiment of this application;
FIG. 20 is another block diagram of a communication apparatus according to an embodiment of this application;
FIG. 21 is a diagram of a structure of an access network device according to an embodiment of this application; and
FIG. 22 is a diagram of a structure of a terminal device according to an embodiment of this application.

### DESCRIPTION OF EMBODIMENTS

The following describes technical solutions of this application with reference to the accompanying drawings.

The technical solutions provided in this application may be applied to various communication systems, for example, a 5G mobile communication system or NR. The 5G mobile communication system may include non-standalone (non-standalone, NSA) networking and/or standalone (standalone, SA) networking.

The technical solutions provided in this application may be further applied to a machine type communication (machine type communication, MTC) network, a long term evolution-machine type communication (Long Term Evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as vehicle-to-X (vehicle-to-X, V2X, where X may represent anything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication.

The technical solutions provided in this application may be further applied to a future communication system, for example, a 6th generation mobile communication system. This is not limited in this application.

Before communication methods provided in embodiments of this application are specifically described, network elements in this application are first briefly described.
1. A terminal device may be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. In the following embodiments, the terminal device, the terminal, and the UE may be alternately used, but meanings expressed by the terminal device, the terminal, and the UE are the same.

The terminal device may be a device that provides voice/data connectivity to a user, for example, a handheld device or a vehicle-mounted device having a wireless connection function. Currently, some examples of the terminal may be: a mobile phone (mobile phone), a tablet computer (pad), a computer having a wireless transceiver function (for example, a notebook computer or a palmtop computer), a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a terminal device in a 5G network, a terminal device in a future evolved public land mobile network (public land mobile network, PLMN), and the like.

In addition, the terminal device may alternatively be a terminal device in an IoT system. An IoT is an important part in future development of information technologies. A main technical feature of the IoT is to connect things to a network by using a communication technology, to implement an intelligent network for human-machine interconnection and thing-thing interconnection. The IoT technology can achieve massive connections, deep coverage, and terminal power saving by using, for example, a narrow band (narrow band, NB) technology.

In addition, the terminal device may alternatively include sensors such as an intelligent printer, a train detector, and a gas station, and main functions include: collecting data (which is a function of some terminal devices), receiving control information and downlink data of a network device, sending an electromagnetic wave, and transmitting uplink data to the network device.

2. Access network (access network, AN) device: An access network can provide a network access function for an authorized user in a specific area, and can use transmission tunnels of different quality based on a user level, a service requirement, and the like. The access network may be an access network using different access technologies. Currently, there are two types of radio access technologies: a 3rd generation partnership project (3rd generation partnership project, 3GPP) access technology (for example, a radio access technology used in a 3G, 4G, or 5G system) and a non-3GPP (non-3GPP) access technology. The 3GPP access technology is an access technology that complies with a 3GPP standard specification. For example, an access network device in the 5G system is referred to as a next generation node base station (next generation node base station, gNB). The non-3GPP access technology is an access technology that does not comply with the 3GPP standard specification, for example, an air interface technology represented by an access point (access point, AP) in wireless fidelity (wireless fidelity, Wi-Fi).

An access network that implements an access network function based on a wireless communication technology may be referred to as a radio access network (radio access network, RAN). The radio access network can manage a radio resource, provide an access service for the terminal device, and further complete forwarding of a control signal and user data between the terminal and a core network.

The radio access network device may include, for example, but is not limited to: a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a radio relay node, a radio backhaul node, a transmission point (transmission point, TP), or a transmission reception point (transmission reception point, TRP); or may be a gNB or a transmission point (TRP or TP) in a 5G (for example, NR) system, or one antenna panel or a group of antenna panels (including a plurality of antenna panels) of a base station in the 5G system; or may be a network node constituting a gNB or a transmission point, for example, a baseband unit (BBU), a distributed unit (distributed unit, DU), or a base station in a next-generation 6G communication system. A specific technology and a specific device form that are used by the radio access network device are not limited in this application. The radio access network device may include a gNB-central unit (central unit, CU) and a gNB-DU. The gNB-CU and the gNB-DU are connected via an F1 interface. The CU is connected to the core network via a next generation (next generation, NG) interface. The gNB-DU includes a function of a physical layer (physical layer, PHY)/media access control (media access control, MAC)/radio link control (radio link control, RLC) layer, and is configured to provide an access service for a relay device attached to the access network device. The gNB-DU may be connected to the gNB-CU via the F1 interface. The gNB-DU may alternatively be connected to the terminal device or a mobile-termination (mobile-termination, MT) function of a mobile relay via a Uu interface.

The gNB-CU is configured to perform radio resource control (radio resource control, RRC) on all relay devices and terminal devices that are connected to the gNB-CU, for example, may store contexts of the relay devices and the terminal devices. The gNB-CU may be connected to a DU function of another relay device via the F1 interface.

3. IAB node (node): An IAB node is proposed in 5G NR research. The IAB node integrates a wireless access link and a wireless backhaul link. The wireless access link is a communication link between the terminal device and the IAB node, and the wireless backhaul link is a communication link between IAB nodes, and is mainly used for data backhaul. After the IAB node is started, an MT function (functionality) of the IAB node accesses the network through cell selection. The IAB node does not need to perform data backhaul via a wired transmission network. Therefore, the IAB node reduces deployment requirements for the wired transmission network, and may be deployed in a scenario in which the wired transmission network is difficult to deploy, such as an outdoor or indoor scenario. To understand the IAB node more clearly, the following describes in detail an IAB network architecture and a communication procedure based on an IAB technology.

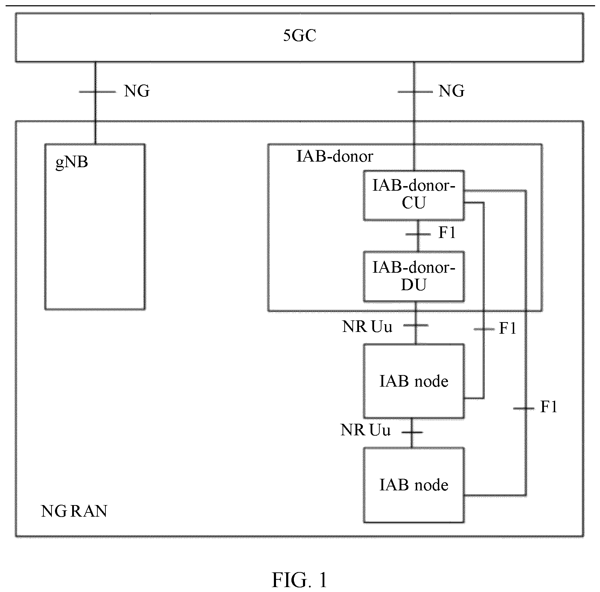

FIG. 1 is a diagram of an IAB network architecture according to an embodiment of this application. As shown in FIG. 1, a 5G core network (5G core network, 5GC) and an NG RAN are included. The NG-RAN supports IAB in a manner in which the IAB node is wirelessly connected to a gNB that can serve the IAB node, and the gNB is named as an IAB-donor (donor). The IAB-donor includes one IAB-donor-central unit (central unit, CU) and one or more IAB-donor-DUs. The IAB node is connected to an upstream IAB node or the IAB-donor-DU via a mobile terminal function (named as an IAB-MT function of the IAB node) of an NR Uu interface. The IAB node provides wireless backhaul for a downstream IAB node and a terminal device via a network function (named as an IAB-DU function of the IAB node) of the NR Uu interface. NG, NR Uu, and F1 in the figure are all logical interfaces, and functions of the interfaces are not described herein again. The IAB node may include two parts: an MT and a DU. The MT has a function similar to that of UE, and communicates with a parent node via the Uu interface to provide data backhaul. The DU of the IAB node has a function similar to that of a DU in the gNB, including a function at a PHY/MAC/RLC layer, and communicates with a child node to provide an access service for the child node.

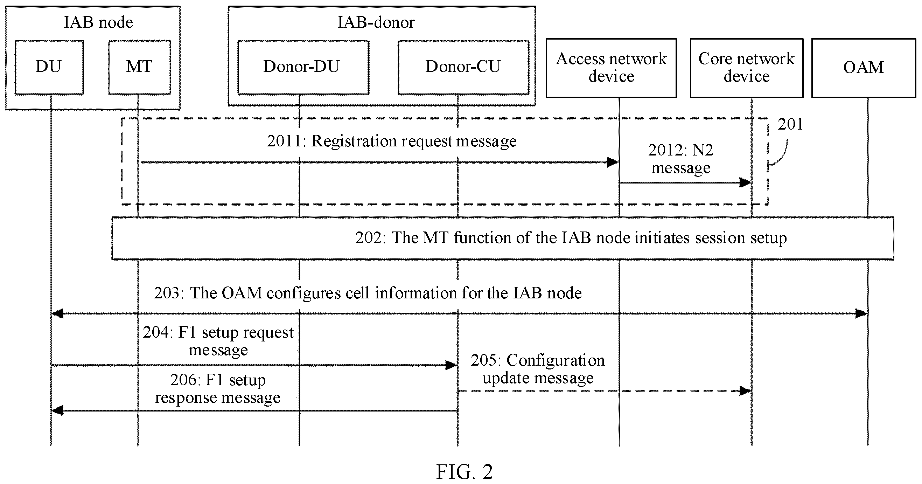

FIG. 2 is a diagram of a communication procedure based on an IAB technology according to an embodiment of this application.

Step 201: An IAB node registers with and accesses a network.

The IAB node may initiate a registration procedure via an access network device to access the network. For example, an MT function of the IAB node accesses the network through cell selection. Specifically, step 201 includes step 2011 and step 2012.

Step 2011: The MT function of the IAB node sends a registration request message to the access network device. Correspondingly, the access network device receives the registration request message.

The MT function of the IAB node sends the registration request message to the access network device. After receiving the registration request message, the access network device may select a core network device for the MT function of the IAB node.

Step 2012: The access network device sends the registration request message to the selected core network device. For example, the registration request message may be sent to the core network device via an N2 message. The registration request message may indicate that the IAB node requests to register with and access the network. In this process, an initial access process of the IAB node is the same as that of a conventional terminal device.

Step 202: The MT function of the IAB node initiates session setup.

The MT function of the IAB node initiates the session setup, so that the core network device allocates an internet protocol (internet protocol, IP) address to the MT function of the IAB node, and the MT function of the IAB node interacts with operations, administration and maintenance (operations, administration and maintenance, OAM) via the IP address.

Step 203: The OAM configures, for the IAB node, cell information such as a cell identifier, a TAC, or another information. It needs to be noted that, in this embodiment of this application, the cell information configured by the OAM for the IAB node is fixed. In other words, regardless of where the IAB node moves, the cell information of the IAB node does not change, that is, the cell information of the IAB node is irrelevant to a geographical location of the IAB node.

Step 204: A DU function of the IAB node sends an F1 setup request (setup request) message to a donor-CU.

After selecting a proper donor radio access network (donor RAN) device, the DU function of the IAB node sends the F1 setup request message to the donor-CU. The F1 setup request message carries the cell information such as the cell identifier, the TAC, or another information supported by the donor-CU. After receiving the F1 setup request message, the donor-CU activates a cell of the IAB node.

The donor RAN in step 204 may be the same as or different from the access network device in step 201. This is not limited.

Step 205: The donor-CU may send a configuration update message to the core network device. Specifically, the donor-CU may send the configuration update message to the core network device through a configuration update procedure.

Step 206: The donor-CU sends an F1 setup response (setup response) message to the DU function of the IAB node. The F1 setup response message carries cell information of an activated cell (cells to be activated list), where the information about the activated cell includes a cell identifier of the activated cell.

It should be understood that, in this embodiment of this application, a meaning of registering with and accessing the network by the IAB node is the same as a meaning of registering with and accessing the network by the MT function of the IAB node. In other words, unless otherwise specified, descriptions of an execution action performed by the MT function of the IAB node may alternatively be replaced with those of an execution action performed by the IAB node.

It should be further understood that for specific content of a network registration and access procedure, refer to an existing network access procedure of the terminal device. For brevity, details are not described herein again.

4. A mobile relay is a radio access network device that has mobility and integrates a wireless access link and a wireless backhaul link. The wireless access link is a communication link between the terminal device and the mobile relay, the wireless backhaul link is a communication link between the mobile relay and a radio access network device that is deployed on the ground and has no mobility, and the wireless backhaul link is mainly used for data backhaul. The mobile relay supports interfaces such as Uu, F1, E1, NG, and X2, and includes a function of the radio access network device and an MT function. The MT function is integrated in the mobile relay, and this function entity is used as a Uu interface termination point of a backhaul link between the mobile relay and a donor radio access network device or another mobile relay. After the mobile relay is started, the MT function performs cell selection, to access the network.

It may be understood that, unlike the IAB node, the mobile relay has mobility. For example, a relay integrating a wireless access link and a wireless backhaul link is carried on a vehicle, so that the relay can move as the vehicle moves. This is a typical mobile relay, namely, a vehicle-mounted relay (vehicle-mounted relay, VMR).

5. A donor radio access network device is usually a radio access network device that is deployed on the ground and has no mobility, and provides network access for the terminal device over a backhaul link between the donor RAN and the mobile relay and an access link provided by the mobile relay. The donor radio access network device may include a CU and one or more DUs. The CU mainly processes non-real-time radio higher layer protocol stack functions, for example, an RRC layer protocol and a packet data convergence layer (packet data convergence protocol, PDCP) protocol. The DU mainly processes a PHY function and a layer 2 function with a high real-time requirement, for example, a PHY protocol. The CU and the DU may communicate with each other via an F1 interface.

A quantity of mobile relays that can be connected to the donor RAN is not limited in this application.

For ease of description, the donor radio access network device is referred to as an access network device for short in this application. Unless otherwise specified, the access network device in embodiments of this application is the donor radio access network device.

The following describes network elements in a core network part. It should be understood that, the core network elements listed below may be separately abbreviated by using English acronyms and abbreviations.

6. AMF network element: An AMF network element belongs to the core network part, and may be referred to as an AMF for short. The access and mobility management network element is mainly responsible for registration, mobility management, and a tracking area update procedure for a terminal in a mobile network. The access and mobility management network element terminates a NAS message, is responsible for registration management, connection management, reachability management, tracking area list (tracking area list, TA list) allocation, the mobility management, and the like, and is responsible for forwarding a session management (session management, SM) message to a session management network element.

7. A session management function (session management function, SMF) network element may be referred to as an SMF for short. The SMF is mainly responsible for user plane function (user plane function, UPF) network element selection, UPF network element reselection, IP address allocation, session setup, modification, and release, and quality of service (quality of service, QoS) control.

8. A UDM network element may be referred to as UDM for short. The UDM is mainly responsible for managing subscription data. When the subscription data is modified, the UDM is responsible for notifying a corresponding network element.

9. A UDR network element may be referred to as a UDR for short. The UDR is mainly configured to: store and retrieve subscription data, policy data, public architecture data, and the like. The UDR is used by the UDM, a policy control function (policy control function, PCF) network element (which may be referred to as a PCF for short), and a network exposure function (network exposure function, NEF) network element (which may be referred to as an NEF for short) to obtain related data. The UDR can provide different data access authentication mechanisms for different types of data, such as the subscription data and the policy data, to ensure data access security. The UDR may return a failure response with an appropriate cause value for an invalid service-oriented operation or data access request.

10. An application function (application function, AF) network element may be referred to as an AF for short. The AF provides an application layer service for the terminal device. When providing the service for the terminal device, the AF has requirements on a QoS policy and a charging (charging) policy, and needs to notify the network. In addition, the AF also needs a core network to feed back application-related information.

11. A UPF network element may be referred to as a UPF for short. The UPF is mainly configured to implement all or some of the following functions: interconnecting a protocol data unit (protocol data unit, PDU) session with a data network, packet routing and forwarding (for example, supporting forwarding of traffic to a data network after performing an uplink classifier (uplink classifier) on the traffic, and supporting a branching node (branching point) to support a multi-homed (multi-homed) PDU session), data packet detection, and the like.

12. An LMF network element may be referred to as an LMF for short. The LMF is responsible for managing and controlling a location service request of target UE, and delivering positioning-related assistance information to the UE according to an LTE positioning protocol (LTE positioning protocol, LPP). An NRPPa protocol (NR positioning protocol A) between the LMF and a gNB is used to control positioning measurement, including uplink measurement towards the gNB or downlink measurement towards the UE. The LMF may negotiate with the target UE according to the LPP protocol to deliver the positioning-related assistance data. The LMF is responsible for selecting a positioning solution for the network based on a location client, QoS-required precision and delay, and positioning capabilities of the UE and the gNB.

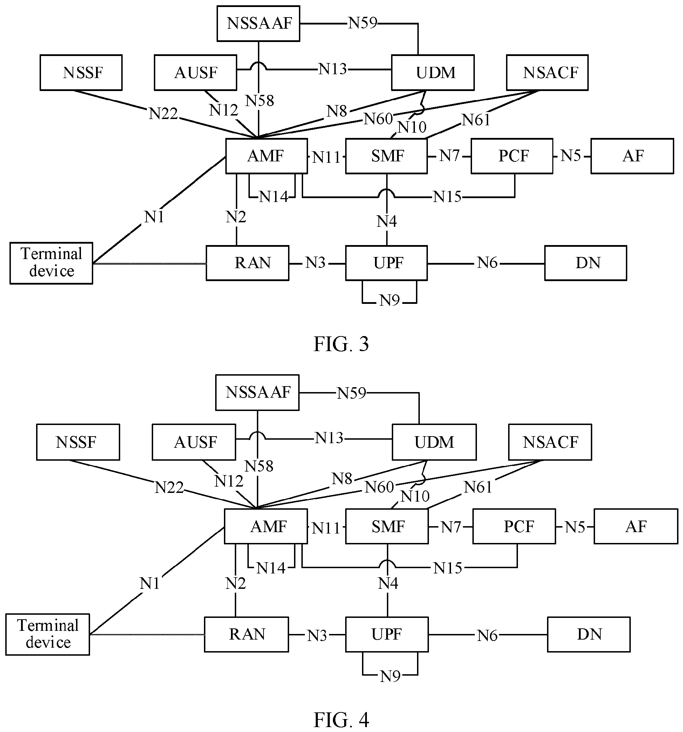

For ease of understanding embodiments of this application, the following describes in detail, with reference to FIG. 3 and FIG. 4, a 5G network architecture applicable to embodiments of this application.

FIG. 3 is a diagram of a network architecture based on a service-based architecture according to an embodiment of this application. The 5G network architecture shown in FIG. 3 may include three parts: a terminal device part, a data network (data network, DN) part, and an operator network part.

An operator network may include one or more of the following network elements: an authentication server function (authentication server function, AUSF) network element, an NEF network element, an LMF network element, a UDM network element, a UDR network element, an NRF network element, an AF network element, an AMF network element, an SMF network element, a RAN network element, a UPF network element, a network slice selection function (network slice selection function, NSSF) network element, a network slice specific authentication and authorization function (network slice specific authentication and authorization function, NSSAAF) network element, a serving communication proxy (service communication proxy, SCP) network element, and the like. In the foregoing operator network, a part other than a radio access network part may be referred to as a core network part. In the network shown in FIG. 3, some network elements may communicate with each other via a service-based interface. Nxxx in the figure is a service-based servitization interface. It should be understood that, for functions of some network elements, refer to descriptions described in the foregoing network elements. For details, refer to a known technology. Details are not described herein again.

FIG. 4 is a diagram of a network architecture based on a point-to-point interface according to an embodiment of this application. For network elements included in a network shown in FIG. 4 and related descriptions of the network elements, refer to descriptions in FIG. 3. Different from the network architecture shown in FIG. 3, in the network architecture shown in FIG. 4, an interface between the network elements is the point-to-point interface instead of a service-based interface.

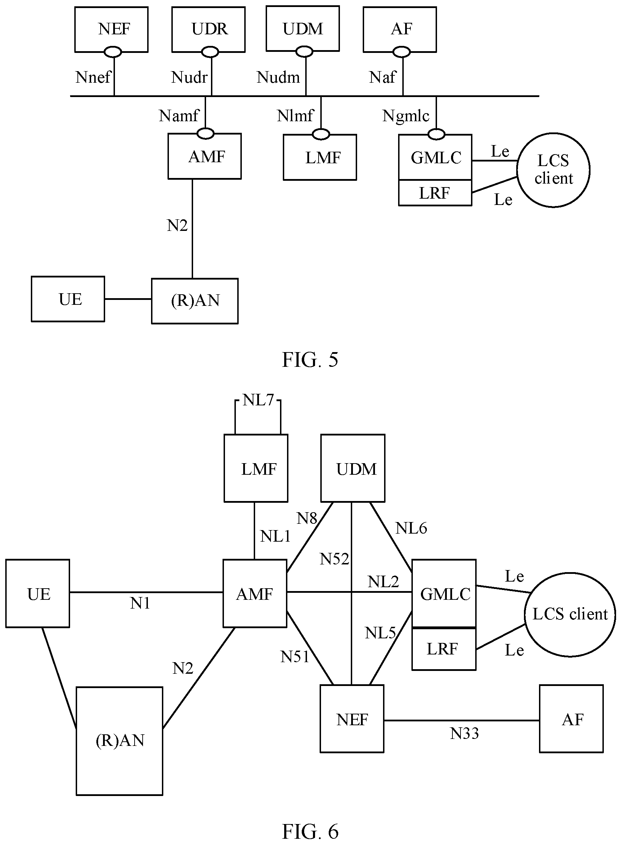

FIG. 5 is a diagram of a positioning architecture based on a service-based architecture according to an embodiment of this application. As shown in FIG. 5, an operator network may include one or more of the following network elements: an NEF network element, a UDM network element, a UDR network element, an AF network element, an AMF network element, an LMF network element, a RAN network element, a gateway mobile location center (gateway mobile location center, GMLC) network element, a location retrieval function (location retrieval function, LRF) network element, and a location service (location service, LCS) client (client). The LCS client may access an LCS service from the GMLC via a Le reference point. The GMLC is the 1^{st} node in a public land mobile network (public land mobile network, PLMN) accessed by an external LCS client (that is, the GMLC supports the Le reference point). In the network shown in FIG. 5, some network elements may communicate with each other via a service-based interface. Nxxx in the figure is a service-based servitization interface.

FIG. 6 is a diagram of a positioning architecture based on a point-to-point interface according to an embodiment of this application. For network elements included in a network shown in FIG. 6 and related descriptions of the network elements, refer to descriptions in FIG. 5. Different from the network architecture shown in FIG. 5, in the network architecture shown in FIG. 6, an interface between the network elements is the point-to-point interface instead of a service-based interface.

For ease of understanding the communication method provided in embodiments of this application, the following describes a system architecture of the communication method provided in embodiments of this application. It may be understood that the system architecture described in embodiments of this application is intended to describe the technical solutions in embodiments of this application more clearly, and does not constitute any limitation on the technical solutions provided in embodiments of this application.

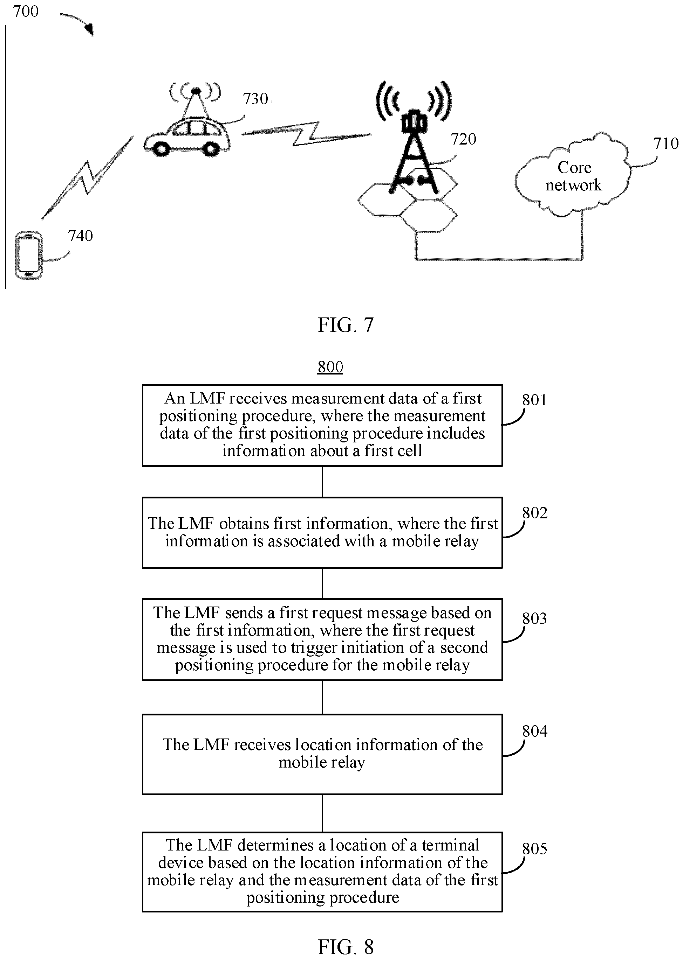

FIG. 7 is a diagram of a system architecture applicable to a method according to an embodiment of this application. As shown in FIG. 7, the system 700 may include a core network 710, an access network device 720, a mobile relay 730, and a terminal device 740.

The system 700 may be, for example, a 5G system (5G system, 5GS). In the 5GS, the core network 710 may be a 5G core network (5G core network, 5GC). For example, the core network 710 may include but is not limited to an AMF, UDM, and an LMF. Each network element may be configured to implement a respective function. For details, refer to the foregoing descriptions. Specific network elements included in the core network 710, and functions, a quantity, and forms of the network elements are not limited in this application. The access network device 720 may be connected to the core network 710, and may be configured to: provide a network access function for an authorized terminal within coverage, manage a radio resource, and complete forwarding of a control signal and user data between the terminal device and the core network 710.

In this embodiment of this application, the access network device 720 may not only provide a wireless access service for the terminal device, but also provide a wireless backhaul function for a mobile relay (the mobile relay 730 shown in FIG. 7), so that the mobile relay can access the core network 710 via the access network device 720. The mobile relay 730 has mobility, and for example, may be deployed on a vehicle. The mobile relay is connected to the access network device 720 over a wireless backhaul link, and is then connected to the core network 710 via the access network device 720. In addition, the mobile relay provides a wireless access link for a nearby terminal device of the mobile relay (including a terminal device that is located within or outside the vehicle and that is close to the mobile relay), so that the terminal device can access the network. For example, the terminal device 740 shown in FIG. 7 is located outside the vehicle, may access the mobile relay 730 over the wireless access link provided by the mobile relay 730, and then accesses the core network 710 over the wireless backhaul link between the access network device 720 and the mobile relay 730.

It should be understood that FIG. 7 is merely an example, and shows one core network, one radio access network device, one mobile relay, and one terminal device. However, this should not constitute any limitation on this application. There may be one or more devices. There may be one or more access network devices accessing the same core network. There may alternatively be one or more mobile relays accessing the same radio access network device. There may alternatively be one or more terminal devices accessing the same mobile relay.

In addition, although not shown in FIG. 7, the terminal device 740 may alternatively be located inside the vehicle.

In an existing positioning technology, there are different positioning procedures. For example, for a UE assisted positioning procedure, the terminal device receives a signal of a surrounding cell (where there may be a plurality of surrounding cells), performs positioning measurement, and reports measurement data to the LMF, where the measurement data includes a cell identifier. The LMF may determine, based on the cell identifier sent by the terminal device, a signal of which cell is used for the terminal device to perform measurement, and further determines a location of the terminal device based on pre-obtained location information of the cell. For another example, for a network assisted positioning procedure, the access network device receives a signal of the terminal device, performs positioning measurement, and reports measurement data to the LMF, where the measurement data includes a cell identifier of this base station. The LMF may determine, based on the cell identifier included in the measurement data, which cell is used for measurement to obtain measurement data, and further determines a location of the terminal device based on pre-obtained location information of the cell. In conclusion, regardless of which positioning procedure is used, positioning measurement data of the terminal device is related to the cell, and the LMF further determines the location of the terminal based on the cell information (such as the cell identifier) included in the measurement data.

However, the mobile relay is widely applied. For example, the mobile relay may be a vehicle-mounted relay (vehicle-mounted relay, VMR) carried on the vehicle, and the terminal device may access the network by accessing the VMR, and move with the VMR. In this case, when a network side needs to initiate a positioning procedure for such a terminal device, for example, for the UE assisted positioning procedure, the terminal device may perform positioning measurement based on a signal of a currently accessed cell of the VMR, and for the network assisted positioning procedure, a cell of the VMR may perform positioning measurement by using the signal of the terminal device. A location of the cell of the VMR changes as the mobile relay moves. Therefore, even if the LMF obtains a cell identifier, the location of the terminal device cannot be determined.

To resolve the foregoing problem, this application provides a communication method. The UE assisted positioning procedure is used as an example for description. In the positioning procedure, the terminal device selects a plurality of cells and performs positioning measurement by using signals of the plurality of cells. The plurality of cells may include a cell of the mobile relay and a cell of a non-mobile relay, or the plurality of cells include only cells of the mobile relay. In addition to obtaining the positioning measurement data for the terminal device, the LMF further needs to obtain location information of the mobile relay. To be specific, the LMF positions the mobile relay, so that the LMF may determine the location information of the terminal device based on the positioning measurement data of the terminal device and the location information of the mobile relay.

It needs to be noted that, the location information of the mobile relay in this application may be understood as location information of an MT function of the mobile relay, for example, location information of a VMR-MT, or location information of IAB-UE. The positioning procedure for the mobile relay in this application may be understood as a positioning procedure for the MT function of the mobile relay, for example, a positioning procedure for a VMR-MT, or a positioning procedure for IAB-UE.

In the foregoing communication method, this application provides the following several possible designs for how the LMF obtains the location information of the mobile relay.

Design 1: The LMF serving the terminal device determines that the positioning measurement data of the terminal device is associated with the mobile relay, where the mobile relay has mobility. Further, the LMF obtains first information associated with the mobile relay, and sends a first request message based on the first information, to trigger a positioning procedure for the mobile relay, to obtain the location information of the mobile relay.

Design 2: After determining that a first cell accessed by the terminal device is the cell of the mobile relay, the AMF serving the terminal device obtains first information associated with the mobile relay, and sends a first request message to the LMF serving the terminal device, where the first request message includes the first information, to trigger a first positioning procedure for the terminal device and a second positioning procedure for the mobile relay, to obtain the location information of the mobile relay by using measurement data of the second positioning procedure.

Design 3: The terminal device receives the location information from the mobile relay, and performs positioning measurement based on a signal from the cell of the mobile relay, to obtain the positioning measurement data. The terminal device sends a first message to the LMF, where the first message carries the location information of the mobile relay and the positioning measurement data, so that the LMF determines the location of the terminal device based on the location information of the mobile relay and the positioning measurement data.

Design 4: After the access network device determines that a first cell accessed by the terminal device is the cell of the mobile relay, and the LMF serving the terminal device initiates a positioning request, the access network device reports both the positioning measurement data of the terminal device and the positioning measurement data of the mobile relay to the LMF serving the terminal device, so that the LMF determines the location of the terminal device.

This application further provides another communication method. The terminal device screens cells used for positioning measurement, and performs measurement by using only a signal of a non-mobile cell, to obtain positioning measurement data, so that the LMF serving the terminal device determines the location of the terminal device based on the positioning measurement data.

The following separately describes the foregoing communication methods in detail with reference to specific embodiments.

To better understand embodiments of this application, the following several points are first described.

First, in embodiments of this application, descriptions such as "when...", "in a case that... ", "assuming that", and "if" all mean that a device (such as a core network device or the access network device) performs corresponding processing in an objective case, but do not constitute a limitation on time, do not require the device (such as the core network device or the access network device) to necessarily have a determining action during implementation, and do not mean other limitations either.

Second, "first", "second", and various numbers in the following embodiments are merely used for differentiation for ease of description, but are not intended to limit the scope of embodiments of this application. For example, the first positioning procedure and the second positioning procedure are used to distinguish between different positioning procedures. A person skilled in the art may understand that the terms such as "first" and "second" do not limit a quantity or an execution sequence, and the terms such as "first" and "second" do not indicate a definite difference.

Third, in embodiments of this application, "at least one" indicates one or more, and "a plurality of" indicates two or more. "And/or" describes an association relationship between associated objects, and represents that three relationships may exist. For example, A and/or B may represent the following cases: A exists alone, both A and B exist, and B exists alone, where A and B may be singular or plural. The character "/" usually indicates an "or" relationship between the associated objects, but does not exclude an "and" relationship between the associated objects. A specific meaning represented by the character "/" may be understood with reference to the context. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

Fourth, the mobile relay in the following embodiments may be, for example, a VMR or mobile IAB. Unless otherwise specified, the access network device in the following embodiments is a donor radio access network device.

Fifth, in embodiments of this application, related descriptions of sending a message or a packet by a network element A to a network element B and receiving, by the network element B, a message or a packet from the network element A are intended to describe a specific network element to which the message or the packet is to be sent, but whether the message or the packet is to be directly sent or indirectly sent via another network element is not limited.

For example, the LMF described in this specification receives an uplink positioning message from the terminal device, and that the terminal device directly sends the uplink positioning message to the LMF is not limited. For example, the terminal device may send the uplink positioning message to the AMF serving the terminal device, and the AMF further sends the uplink positioning message to the LMF. Although examples are not listed one by one in this specification, a person skilled in the art can understand the meaning.

Sixth, in embodiments of this application, the cell of the mobile relay may also be referred to as a mobile cell, or a VMR cell, or a mobile IAB cell, and it may be understood as that the cell has mobility. The cell of the non-mobile relay may also be referred to as a non-mobile cell, or a non-VMR cell, or a non-mobile IAB cell, and it may be understood as that a location of the cell is fixed.

Seventh, in embodiments of this application, the location information is information used to describe a specific geographical location. For example, the location information of the mobile relay is geographical location information of the mobile relay.

The following first describes the foregoing first communication method in detail. For example, for the UE assisted positioning procedure, the terminal device selects the plurality of cells and performs positioning measurement by using the signals of the plurality of cells. The plurality of cells include the cell of the mobile relay and the cell of the non-mobile relay, or the plurality of cells include only the cells of the mobile relay. In this case, the measurement data collected by the terminal device includes an identifier of the cell of the mobile relay and an identifier of the cell of the non-mobile relay. For another example, for the network assisted positioning procedure, the mobile relay may perform positioning measurement by using the signal of the terminal device. In this case, the measurement data collected by the mobile relay includes an identifier of the cell of the mobile relay. Regardless of which positioning procedure is used, in addition to obtaining the positioning measurement data of the terminal device, the core network device further needs to obtain the location information of the mobile relay, so that the core network device may determine the location of the terminal device based on the positioning measurement data of the terminal device and the location information of the mobile relay.

It needs to be noted that, in this embodiment of this application, the mobile relay is configured to provide a relay service between the terminal device and the access network device, and the mobile relay has mobility. In the first communication method, for the UE assisted positioning procedure, the terminal device may not sense whether a signal used for positioning measurement is the signal of the cell of the mobile relay. That is, the terminal device may perform positioning measurement by using the signal of the cell of the mobile relay. In this case, the terminal device may perform positioning measurement by using the signal of the currently accessed cell of the mobile relay, or may perform positioning measurement by using a signal of another cell of the mobile relay. That is, the cell that is of the mobile relay and that is accessed by the terminal device and the cell that is of the mobile relay and that is used for the positioning measurement may be a same cell or different cells. This is not limited in this embodiment of this application.

In an example, the cell currently accessed by the terminal device is a cell 1, the cell 1 is the cell of the mobile relay, and a cell 2 is also the cell of the mobile relay. The terminal device may perform positioning measurement by using a signal of the cell 1, or may perform positioning measurement by using a signal of the cell 2. This is not limited in this embodiment of this application.

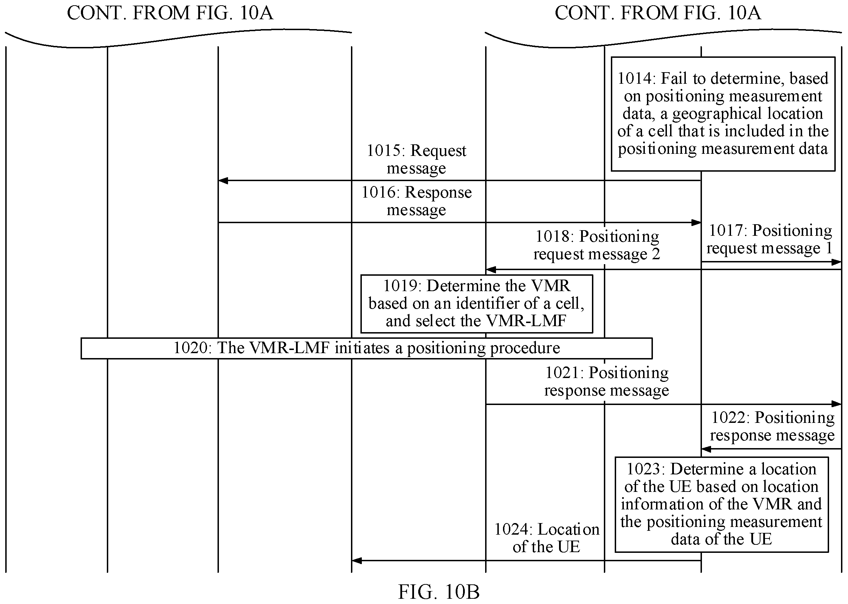

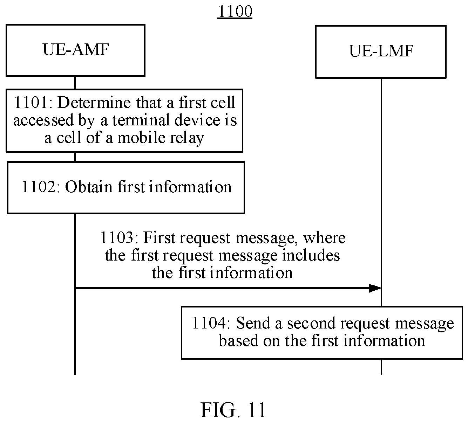

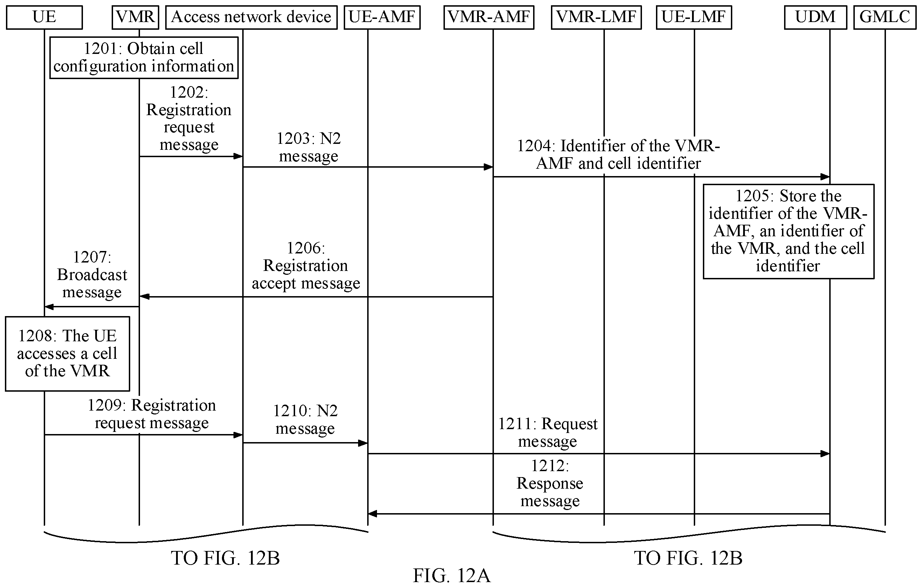

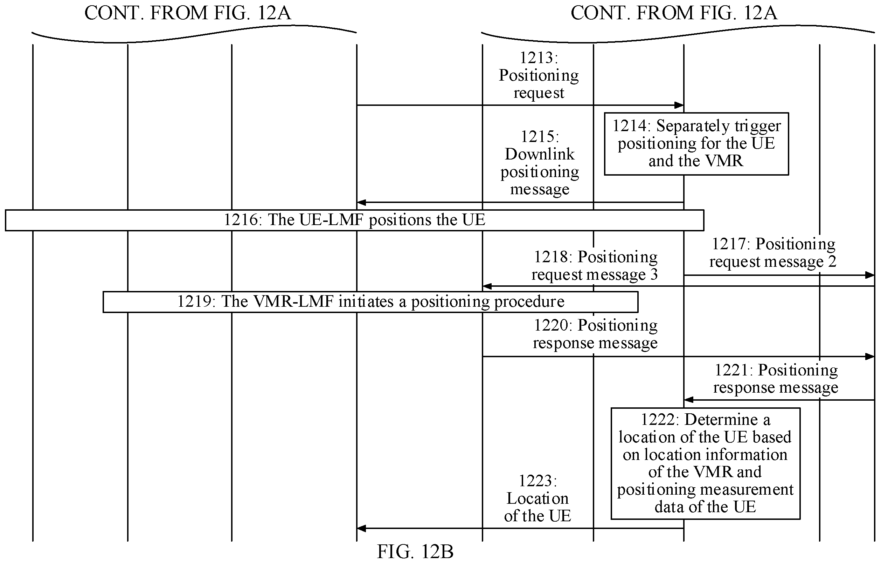

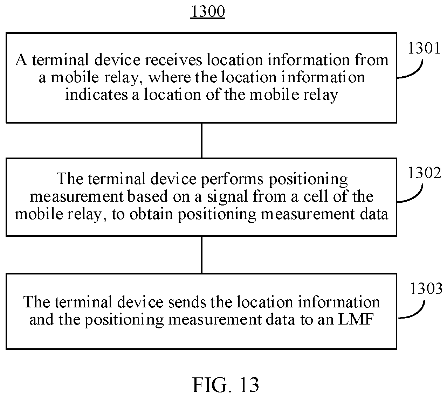

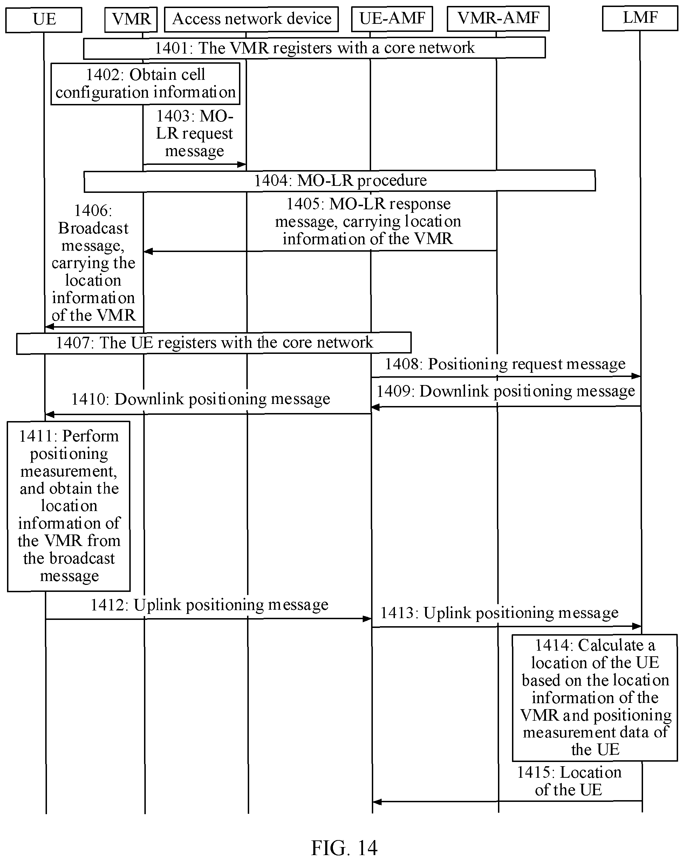

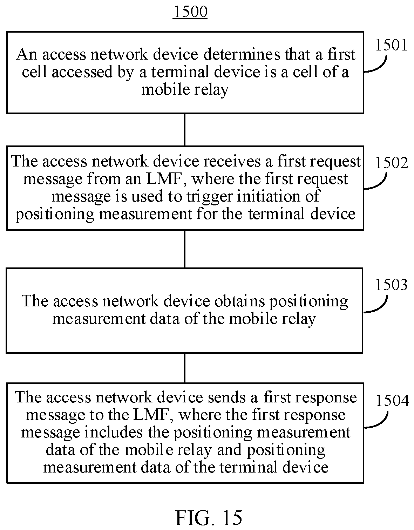

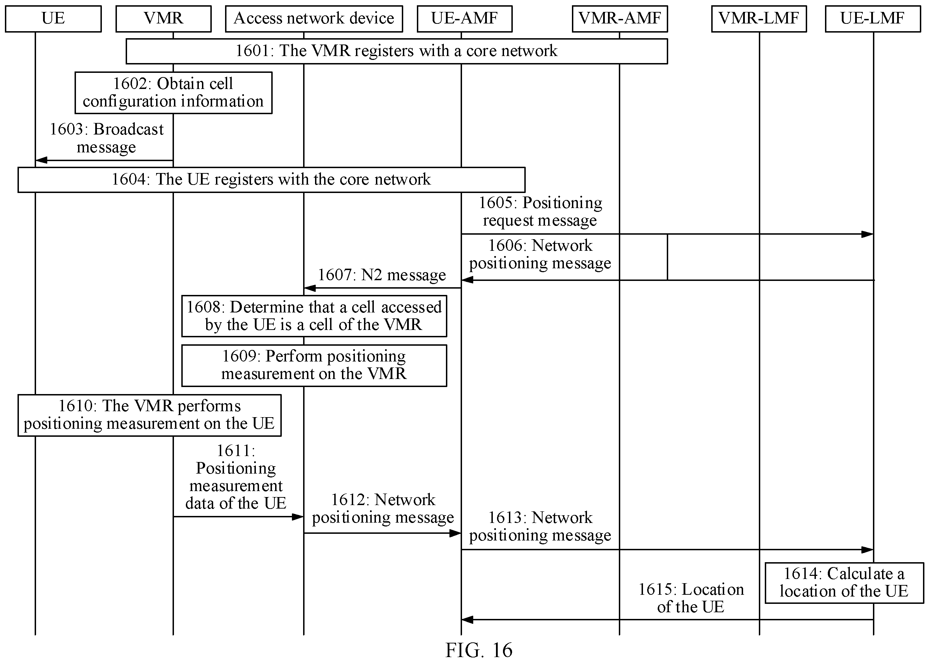

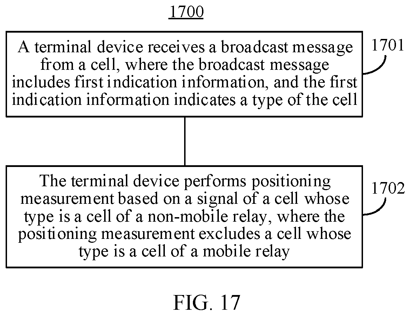

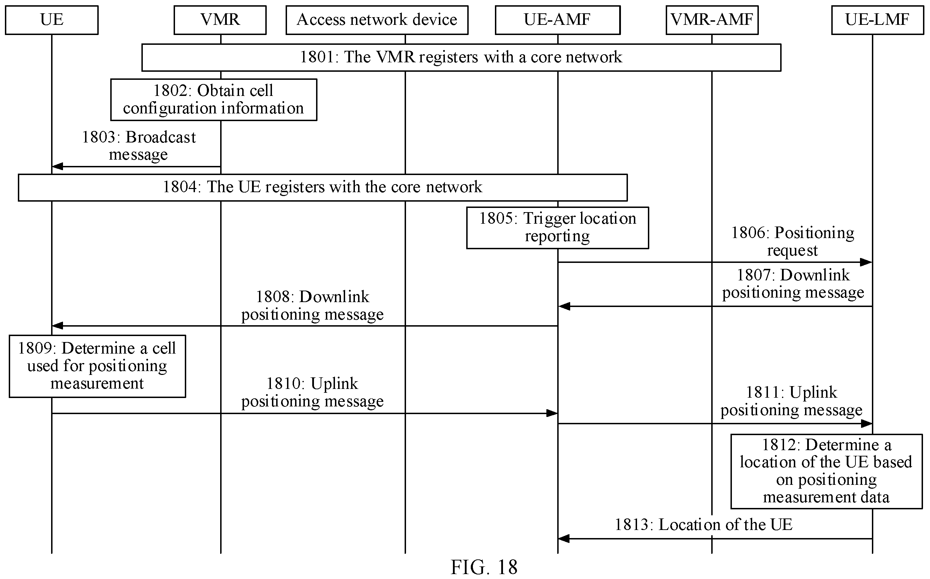

As described above, in the foregoing communication method, this application provides four possible designs for how the LMF serving the terminal device obtains the location information of the mobile relay. The following separately describes the foregoing four possible designs with reference to the accompanying drawings. FIG. 8 to FIG. 10A and FIG. 10B show a communication method for Design 1, FIG. 11, FIG. 12A, and FIG. 12B show a communication method for Design 2, FIG. 13 and FIG. 14 show a communication method for Design 3, FIG. 15 and FIG. 16 show a communication method for Design 4, and FIG. 17 and FIG. 18 show the second communication method.

The following first describes the communication method in Design 1. To be specific, the LMF serving the terminal device determines that the positioning measurement data of the terminal device is associated with the mobile relay, where the mobile relay has mobility. Further, the LMF serving the terminal device obtains the first information associated with the mobile relay, and sends a first positioning request message based on the first information, to trigger the positioning procedure for the mobile relay, to obtain the location information of the mobile relay.

FIG. 8 is a schematic flowchart of a communication method 800 according to an embodiment of this application. The method 800 shown in FIG. 8 may include step 801 to step 805. The following describes in detail the steps in the method 800.

Step 801: An LMF receives measurement data of a first positioning procedure, where the measurement data of the first positioning procedure includes information about a first cell.

The LMF is an LMF (which may be denoted as a UE-LMF) serving a terminal device. The first positioning procedure is a positioning procedure initiated for the terminal device, to obtain the measurement data of the first positioning procedure. The first cell is a cell of a mobile relay, and the mobile relay has mobility, in other words, a location of the cell is not fixed.

In a possible implementation, the UE-LMF initiates the first positioning procedure by using a terminal device assisted positioning procedure, to obtain the measurement data of the first positioning procedure.

For example, the UE-LMF sends a downlink positioning message to the terminal device, to trigger positioning for the terminal device. After receiving the downlink positioning message (downlink positioning message) from the UE-LMF, the terminal device performs positioning measurement based on a signal (for example, a positioning reference signal (positioning reference signal, PRS)) of a surrounding cell. For example, the terminal device performs positioning measurement based on a signal of the first cell, to obtain measurement data of the first positioning procedure, and sends an uplink positioning message (uplink positioning message) to the UE-LMF. The uplink positioning message carries the measurement data of the first positioning procedure, and the measurement data of the first positioning procedure includes the information about the first cell, for example, a cell ID of the first cell.

A parameter used by the terminal device to perform positioning measurement based on the signal of the first cell is not limited in this application. For example, the terminal device may measure a downlink reference signal time difference based on a PRS of an access network device, and/or the terminal device may measure a downlink reference signal received power of each beam. In addition, the measurement data sent by the terminal device to the UE-LMF further includes a measurement report, and a measurement parameter included in the measurement report is not limited in this application. For example, the measurement parameter included in the measurement report may include the downlink reference signal time difference, and/or the downlink reference signal received power of each beam.

The terminal device may perform positioning measurement by using the signal of a cell that is currently accessed by the terminal devie and that is of the mobile relay. Besides, in addition to performing positioning measurement by using the signal of the cell of the mobile relay, the terminal device may further perform measurement by using a signal of another cell. The another cell may be another cell of the mobile relay, or may be a cell of a non-mobile relay, for example, a cell that is served by a base station deployed on each side of a road outside a vehicle, namely, a cell at a fixed location.

In another possible implementation, the UE-LMF initiates the first positioning procedure by using a network assisted positioning procedure. To be specific, an access network device performs measurement based on a signal sent by the terminal device, and sends measurement data to the UE-LMF, so that the UE-LMF determines a location of the terminal device.

For example, the UE-LMF sends a network positioning message to the access network device (for example, the UE-LMF sends a network positioning message (network positioning message) to an AMF serving the terminal device, and the AMF sends the network positioning message to the access network device), to trigger positioning for the terminal device. The terminal device is connected to the access network device via the mobile relay. After receiving the network positioning message from the UE-LMF, the access network device triggers the mobile relay to perform positioning measurement on the terminal device (that is, the mobile relay performs measurement based on the signal sent by the terminal device, to obtain the measurement data of the first positioning procedure). After receiving the measurement data of the first positioning procedure from the mobile relay, the access network device sends a network positioning message to the UE-LMF. The network positioning message carries the measurement data of the first positioning procedure, and the measurement data of the first positioning procedure includes the information about the first cell, for example, a cell ID of the first cell.

A parameter used by the mobile relay to perform positioning measurement on the terminal device is not limited in this application. For example, the mobile relay measures uplink relative time of arrival, and/or the mobile relay measures an angle of arrival based on a beam in which the terminal device is located. In addition, the measurement data sent by the access network device to the UE-LMF further includes a measurement report, and a measurement parameter included in the measurement report is not limited in this application. For example, the measurement parameter included in the measurement report may be an uplink angle of arrival, the uplink relative time of arrival, and/or the like.

In addition, it needs to be noted that the UE-LMF may alternatively initiate the first positioning procedure by using both the terminal device assisted positioning procedure and the network assisted positioning procedure. That is, it may be understood that if the first positioning procedure in this application includes both the terminal device assisted positioning procedure and the network assisted positioning procedure, the measurement data of the first positioning procedure includes the positioning measurement data sent by the terminal device to the UE-LMF and the positioning measurement data sent by the access network device to the UE-LMF.

Optionally, the LMF serving the terminal device may determine, based on the information about the first cell included in the measurement data of the first positioning procedure, that the first cell is a cell of a mobile relay. The following describes in detail several possible designs in which the LMF determines that the first cell is a cell of a mobile relay.

In a first possible design, the information about the first cell includes the cell ID of the first cell, and the UE-LMF determines, based on the cell ID of the first cell, that the first cell is a cell of a mobile relay. In an example, the UE-LMF prestores a cell ID of a cell of at least one mobile relay, and the UE-LMF may determine, based on the cell ID of the first cell, that the first cell is a cell of a mobile relay. As shown in Table 1, the UE-LMF prestores 10 cell IDs (cells of a mobile relay): a cell ID #1, a cell ID #2, ..., and a cell ID #10. The UE-LMF may determine, based on the cell ID of the first cell, that the first cell is a cell of a mobile relay.

**Table 1**

| Cell IDs of cells of a mobile relay prestored by a UE-LMF | |
|---|---|
| Cell IDs | Cell ID #1, cell ID #2, ..., and cell ID #10 |

In another example, the UE-LMF prestores a cell ID of a cell of a non-mobile relay and location information corresponding to the cell ID, and may determine, based on the cell ID of the first cell, that the first cell is not a cell of a non-mobile relay, that is, the first cell is a cell of a mobile relay. As shown in Table 2, Table 2 shows correspondences between a plurality of cell IDs and location information. For example, location information corresponding to the cell ID #1 is location information #1.

**Table 2**

| Cell identifiers of a non-mobile relay and location information corresponding to the cell identifiers prestored by a UE-LMF | |
|---|---|
| Cell ID #1 | Location information #1 |
| Cell ID #2 | Location information #2 |
| Cell ID #3 | Location information #3 |
| Cell ID#4 | Location information #4 |

In a second possible design, the information about the first cell further includes first indication information, where the first indication information indicates that the first cell is a cell of a mobile relay, and the LMF may determine, based on the first indication information, that the first cell is a cell of a mobile relay. In an example, the indication information may be a flag bit. For example, if the flag bit is 1, it indicates that the first cell is a cell of a mobile relay, and if the flag bit is 0, it indicates that the first cell is a cell of a non-mobile relay.

Optionally, the LMF serving the terminal device may determine, based on the first indication information included in the information about the first cell, to trigger a second positioning procedure for the mobile relay. For example, the LMF serving the terminal device receives the measurement data of the first positioning procedure, where the measurement data includes the information about the first cell, and the information about the first cell includes the first indication information; and the LMF may trigger, based on the first indication information, to initiate the second positioning procedure for the mobile relay. It may be understood that the first indication information triggers the LMF serving the terminal device to obtain the first information, and the LMF serving the terminal device further triggers, based on the first information, to initiate the second positioning procedure for the mobile relay.

Step 802: The LMF obtains the first information, where the first information is associated with the mobile relay.

After determining that the first cell is a cell of a mobile relay, the UE-LMF obtains the first information, where the first information is associated with the mobile relay. That is, the UE-LMF determines a mobile relay with which the first cell is associated, and may further determine to perform positioning measurement for the mobile relay.

In a possible implementation, the UE-LMF sends a second request message to a first network element, where the second request message includes the cell identifier of the first cell; and further receives a second response message from the first network element, where the second response message includes the first information. In other words, the UE-LMF requests the first information from the first network element.

Optionally, the first network element may be the access network device, or may be UDM, a UDR, or an NRF.

In an example, the UE-LMF obtains the first information from any one of the UDM, the UDR, or the NRF. The UDM is used as an example. The UDM prestores correspondences among cell identifiers, identifiers of AMFs serving mobile relays, and identifiers of the mobile relays. For example, the UE-LMF sends a request message to the UDM, where the request message includes the cell identifier of the first cell. The UDM may determine an identifier of a corresponding AMF and an identifier of a mobile relay based on the cell identifier of the first cell, and the AMF is an AMF serving the mobile relay. Further, the UDM sends at least one of the identifier of the AMF and the identifier of the mobile relay to the UE-LMF. Correspondingly, the UE-LMF receives a response message from the UDM, where the response message includes the first information, and the first information includes the at least one of the identifier of the AMF and the identifier of the mobile relay. The UDM prestores the correspondences among the cell identifiers, the identifiers of the AMFs serving the mobile relays, and the identifiers of the mobile relays, as shown in Table 3.

**Table 3**

| Correspondences among cell identifiers, identifiers of AMFs, and identifiers of mobile relays | |
|---|---|
| Cell ID #1 | AMF ID #1 and identifier #1 of mobile relay |
| Cell ID #2 | AMF ID #2 and identifier #2 of mobile relay |
| Cell ID #3 | AMF ID #3 and identifier #3 of mobile relay |
| Cell ID#4 | AMF ID #4 and identifier #4 of mobile relay |

As shown in Table 3, Table 3 shows the correspondences among the plurality of cell IDs, the identifiers of the AMFs, and the identifiers of the mobile relays. For example, the identifier of the AMF corresponding to the cell ID #1 is the AMF ID #1, and the identifier of the mobile relay is the identifier #1 of the mobile relay.

It needs to be noted that a method for the UDM to store the foregoing correspondence may be as follows. A VMR is used as an example. An MT function of the VMR initiates a registration procedure to a network. Specifically, the VMR sends a registration request message to the access network device, where the registration request message carries a cell identifier (such as a cell ID) corresponding to a cell of the VMR. The access network device selects an AMF for the MT function of the VMR, and sends the registration request message to the AMF serving the VMR, where the registration request message carries the cell identifier (such as the cell ID) corresponding to the cell of the VMR. The AMF serving the VMR sends, to the UDM, the cell identifier corresponding to the cell of the VMR. In this case, the UDM stores an identifier of the MT function of the VMR, an identifier of the AMF serving the VMR, and the cell identifier corresponding to the cell of the VMR.

It needs to be noted that the UDM may store the foregoing correspondence. In other words, the UE-LMF may obtain, from the UDM, at least one of the identifier of the AMF serving the mobile relay and the identifier of the mobile relay, but this should not constitute any limitation on this embodiment of this application. For example, the NRF or the UDR may alternatively store the correspondence. In other words, the UE-LMF may alternatively obtain, from the NRF or the UDR, at least one of the identifier of the AMF serving the mobile relay and the identifier of the mobile relay.

The identifier of the mobile relay may be the identifier of the MT function of the mobile relay, or may be an identifier of IAB-UE. For example, the identifier of the mobile relay may be a subscription permanent identifier (subscription permanent identifier, SUPI) of the VMR-MT, or an SUPI of the IAB-UE.

In another example, the UE-LMF obtains the first information from the access network device. For example, the UE-LMF sends a request message to the access network device, where the request message includes the cell identifier of the first cell. The access network device determines, based on the cell identifier of the first cell, an identifier that is of an AMF serving a mobile relay and that corresponds to the cell identifier, and the access network device sends a response message to the UE-LMF, where the response message includes first information, and the first information includes the identifier of the AMF. Correspondingly, the UE-LMF receives the response message from the access network device, to obtain the identifier of the AMF.

It needs to be noted that the access network device locally stores context information of a mobile relay, where the context information includes the cell identifier of the first cell of the mobile relay and the identifier of the AMF serving the mobile relay. When receiving the request message from the UE-LMF, the access network device may determine, based on the context information of the mobile relay, the identifier that is of the AMF and that corresponds to the cell identifier of the first cell.

Optionally, the UE-LMF may alternatively obtain the first information from the AMF serving the terminal device.

The first information includes the identifier of the AMF serving the mobile relay and/or the identifier of the mobile relay.

It needs to be noted that assuming that the UE-LMF obtains the first information from the AMF serving the terminal device, the UE-LMF may obtain the first information and then initiate the first positioning procedure for the terminal device, that is, the UE-LMF may initiate the first positioning procedure for the terminal device only after obtaining the first information. Assuming that the UE-LMF obtains the first information from the UDM, the UDR, the NRF, or the access network device, the UE-LMF may initiate the first positioning procedure for the terminal device and then obtain the first information, that is, the UE-LMF may obtain the first information only after obtaining the measurement data of the first positioning procedure. In conclusion, a sequence of step 801 and step 802 is not limited in this embodiment of this application.

In a possible implementation, the AMF serving the terminal device (denoted as a UE-AMF) obtains the first information, and sends the first information to the LMF serving the terminal device. Correspondingly, the LMF serving the terminal device obtains the first information.

A process in which the UE-AMF obtains the first information is as follows.

In a possible design, the UE-AMF obtains the first information from the UDM, the NRF, or the UDR. The UDM is used as an example. The UDM prestores the correspondence among a cell identifier, an identifier of an AMF serving a mobile relay, and an identifier of the mobile relay. For example, the UE-AMF sends a request message to the UDM, where the request message includes the cell identifier of the first cell. The UDM may determine, based on the cell identifier of the first cell, an identifier of a corresponding AMF serving the mobile relay and an identifier of the mobile relay. Further, the UDM sends, to the UE-AMF, at least one of the identifier of the AMF serving the mobile relay and the identifier of the mobile relay. Correspondingly, the UE-AMF receives a response message from the UDM, where the response message includes the first information, and the first information includes the at least one of the identifier of the AMF serving the mobile relay and the identifier of the mobile relay. The UDM prestores the correspondences among the cell identifiers, the identifiers of the AMFs serving the mobile relays, and the identifiers of the mobile relays, as shown in Table 3.

It needs to be noted that, for a method for the UDM to store the foregoing correspondence, refer to related descriptions in step 802. Details are not described herein again.

In another possible design, the UE-AMF obtains the first information from the access network device. For example, the UE-AMF sends a request message to the access network device, where the request message includes the cell identifier of the first cell. The access network device determines, based on the cell identifier of the first cell, an identifier that is of an AMF serving a mobile relay and that corresponds to the cell identifier, and sends a response message to the UE-AMF, where the response message includes the first information, and the first information includes the identifier of the AMF serving the mobile relay. Correspondingly, the UE-AMF receives the response message from the access network device, to obtain the identifier of the AMF serving the mobile relay.

It needs to be noted that the access network device locally stores context information of the mobile relay, where the context information includes the cell identifier of the mobile relay and the identifier of the AMF serving the mobile relay. When receiving the request message from the UE-AMF, the access network device may determine, based on the context information of the mobile relay, the identifier that is of the AMF serving the mobile relay and that corresponds to the cell ID of the VMR.

In addition, the access network device may further actively send, to the UE-AMF, the identifier of the AMF serving the mobile relay. For example, when the access network device sends, to the UE-AMF, an N2 message associated with the terminal device, the N2 message carries the identifier of the AMF serving the mobile relay.

After the UE-AMF obtains the first information, a process of sending the first information to the UE-LMF is as follows.

The UE-AMF sends a positioning request message (which may also be directly referred to as a request message, and this is not limited in this embodiment of this application) to the UE-LMF. The positioning request message is used to trigger the first positioning procedure for the terminal device, the positioning request message includes first information, and the first information is used to trigger a second positioning procedure for the mobile relay.

In an implementation method, the UE-AMF sends the positioning request message to the UE-LMF, where the first information included in the positioning request message includes the identifier of the AMF serving the mobile relay and the identifier of the mobile relay. The positioning request message further includes an LCS correlation identifier (LCS correlation identifier) associated with the terminal device. Correspondingly, after receiving the positioning request message, the UE-LMF separately triggers positioning for the terminal device and the mobile relay. Because the positioning request message carries the identifier of the AMF serving the mobile relay and the identifier of the mobile relay, the UE-LMF may directly trigger, based on the identifier of the AMF, the AMF to initiate a positioning procedure for the mobile relay. For example, the UE-LMF may trigger the positioning procedure for the mobile relay by using a 5GC-MT-location request (location request, LR) procedure.

In another implementation method, the UE-AMF sends the positioning request message to the UE-LMF, where the first information included in the positioning request message includes the identifier of the mobile relay. The positioning request message further carries an LCS correlation identifier associated with the terminal device. Correspondingly, after receiving the positioning request message, the UE-LMF separately triggers positioning for the terminal device and the mobile relay. Because the positioning request message carries only the identifier of the mobile relay, the UE-LMF may serve as a location client to trigger a core network to initiate the positioning procedure for the mobile relay. For example, the UE-LMF may trigger the positioning procedure for the mobile relay by using the 5GC-MT-LR procedure.

Step 803: The LMF sends a first request message based on the first information, where the first request message is used to trigger a second positioning procedure for the mobile relay.

The first request message may be, for example, a positioning request message 1 described below.

The UE-LMF initiates a second positioning procedure based on the first information, where the second positioning procedure is used to position the mobile relay. For example, the UE-LMF serves as the location client to send a positioning request message 1 to the GMLC, and the GMLC sends a positioning request message 2 to the AMF serving the mobile relay.

In a possible design, the UE-LMF obtains the first information from the UDM, the UDR, or the NRF, where the first information includes the identifier of the AMF serving the mobile relay and the identifier of the mobile relay. The UE-LMF sends the positioning request message 1 to the GMLC, where the positioning request message 1 carries the identifier of the AMF serving the mobile relay and the identifier of the mobile relay. The GMLC sends the positioning request message 2 to the corresponding AMF based on the received identifier of the AMF and the received identifier of the mobile relay. The positioning request message 2 sent by the GMLC carries the identifier of the mobile relay, to indicate a mobile relay for which the AMF initiates the positioning procedure, namely, the second positioning procedure.

In another possible design, the UE-LMF obtains the first information from the UDM, the UDR, or the NRF. The UDM is used as an example. The first information includes one of the identifier of the AMF and the identifier of the mobile relay. An example in which the first information includes the identifier of the mobile relay is used. The UE-LMF sends the positioning request message 1 to the GMLC, where the positioning request message 1 carries the identifier of the mobile relay. After receiving the positioning request message 1, the GMLC queries, from the UDM based on the identifier of the mobile relay, the identifier of the AMF serving the mobile relay, and sends the positioning request message 2 to the corresponding AMF. It may be understood that the positioning request message 2 sent by the GMLC carries the identifier of the mobile relay, to indicate the GMLC to determine, based on the identifier of the mobile relay, an AMF serving a mobile relay (for example, the GMLC queries, from the UDM based on the identifier of the mobile relay, an identifier of an AMF serving the mobile relay), and to further indicate a mobile relay for which the AMF initiates the positioning procedure, namely, the second positioning procedure.

In still another possible design, the UE-LMF obtains the first information from the access network device, where the first information includes the identifier of the AMF serving the mobile relay. The UE-LMF sends the positioning request message 1 to the GMLC, where the positioning request message 1 carries the identifier of the AMF serving the mobile relay and the cell identifier of the first cell. After receiving the positioning request message 1, the GMLC sends the positioning request message 2 to the corresponding AMF. The positioning request message 2 sent by the GMLC carries the cell identifier of the first cell, so that the AMF determines, based on the cell identifier, an identifier of a corresponding mobile relay, that is, determines a mobile relay for which the positioning procedure, namely, the second positioning procedure is initiated.

It may be understood that content carried in the positioning request message sent by the UE-LMF to the GMLC may be different from content carried in the positioning request message sent by the GMLC to the AMF serving the mobile relay. For ease of differentiation, the positioning request message sent by the UE-LMF to the GMLC is denoted as the positioning request message 1, and the positioning request message sent by the GMLC to the AMF serving the mobile relay is denoted as the positioning request message 2.

It needs to be noted that a manner in which the AMF serving the mobile relay determines an identifier of a corresponding mobile relay based on the cell identifier is as follows: The AMF serving the mobile relay locally stores context information of the mobile relay, where the context information includes the cell identifier of the first cell of the mobile relay and the identifier of the mobile relay. When receiving the positioning request message, the AMF may determine, based on the context information of the mobile relay, the identifier of the mobile relay corresponding to the mobile relay of the first cell.

Step 804: The LMF receives the location information of the mobile relay.

The LMF is an LMF serving the terminal device, and the location information is determined based on the second positioning procedure.

In a possible implementation, the LMF serving the mobile relay initiates the second positioning procedure for the mobile relay. For example, the mobile relay may perform measurement based on a signal of a cell of the access network device (that is, the terminal device assisted positioning procedure is used), to obtain measurement data of the second positioning procedure. For another example, the access network device may perform measurement based on a signal sent by the mobile relay (that is, the network assisted positioning procedure is used), to obtain measurement data of the second positioning procedure. A specific execution process of the positioning procedure for the mobile relay is similar to that of the positioning procedure for the terminal device. In the second positioning procedure, the network side selects an LMF for the mobile relay, and the LMF is responsible for determining location information of the mobile relay based on the measurement data of the second positioning procedure.

In addition, it needs to be noted that the LMF serving the mobile relay may alternatively initiate the second positioning procedure by using both the terminal device assisted positioning procedure and the network assisted positioning procedure. In other words, it may be understood that the second positioning procedure in this application includes both the terminal device assisted positioning procedure and the network assisted positioning procedure.

After the LMF serving the mobile relay calculates the location information of the mobile relay based on the measurement data of the second positioning procedure (assuming that the LMF serving the mobile relay knows a location of the access network device), the LMF sends the location information of the mobile relay to the LMF serving the terminal device. Correspondingly, the LMF serving the terminal device obtains the location information of the mobile relay.

It may be understood that the LMF serving the terminal device and the LMF serving the mobile relay may be a same LMF or different LMFs.

Step 805: The LMF determines a location of the terminal device based on the location information of the mobile relay and the measurement data of the first positioning procedure.

The LMF serving the terminal device obtains the location information of the mobile relay, and then calculates the location of the terminal device based on the measurement data of the first positioning procedure (namely, the positioning measurement data of the terminal device).

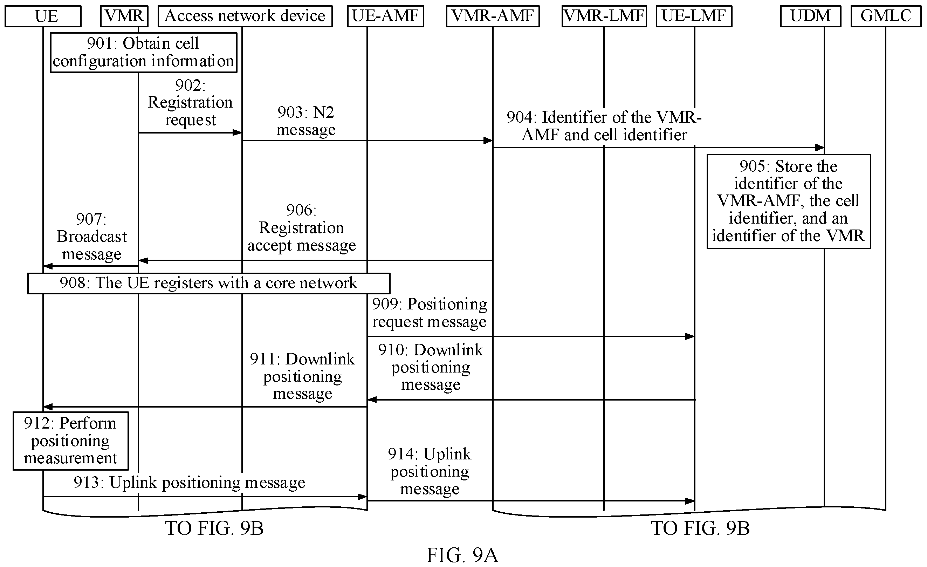

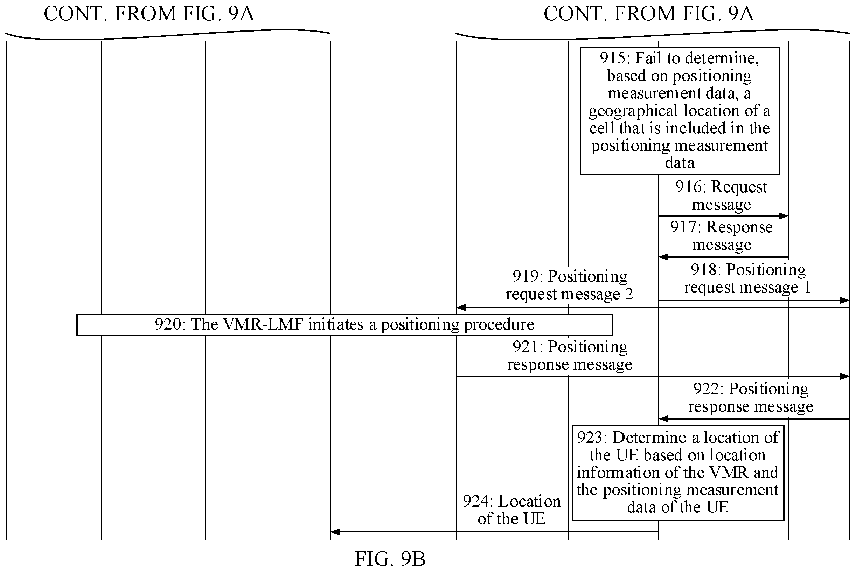

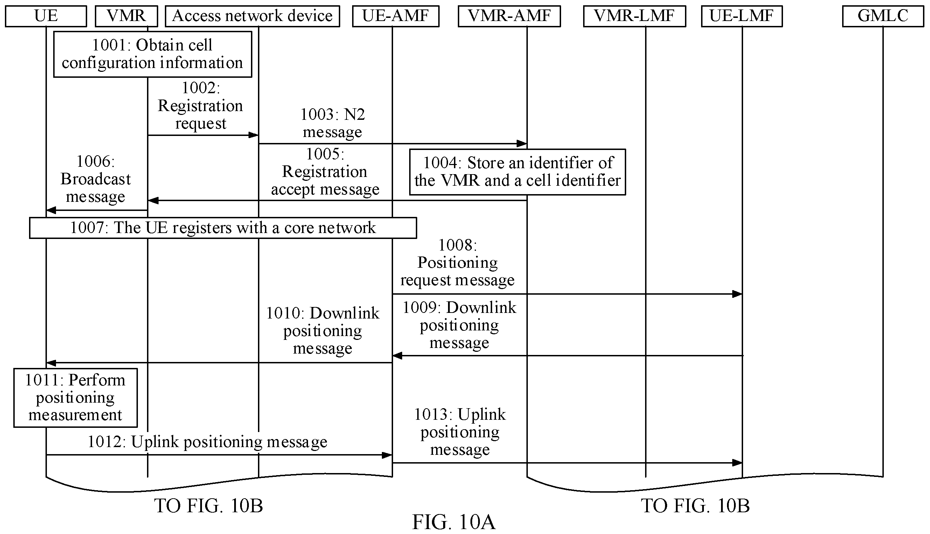

FIG. 9A, FIG. 9B, FIG. 10A, and FIG. 10B are examples of the communication method in the embodiment shown in FIG. 8. A difference between the embodiment shown in FIG. 9A and FIG. 9B and the embodiment shown in FIG. 10A and FIG. 10B lies in that in the embodiment shown in FIG. 9A and FIG. 9B, the UE-LMF obtains the first information from the UDM, and in the embodiment shown in FIG. 10A and FIG. 10B, the UE-LMF obtains the first information from the access network device.

As shown in FIG. 9A and FIG. 9B, the method shown in FIG. 9A and FIG. 9B includes step 901 to step 924. The following describes in detail the steps in the method shown in FIG. 9A and FIG. 9B. It should be understood that, in the method shown in FIG. 9A and FIG. 9B, an example in which the mobile relay is a VMR is used. A UE-AMF is an AMF serving UE, a VMR-AMF is an AMF serving the VMR, a UE-LMF is an LMF serving a terminal device, and a VMR-LMF is an LMF serving the VMR.

It should be further understood that in this embodiment of this application, the AMF serving the UE and the AMF serving the VMR may be a same AMF or different AMFs. Similarly, the LMF serving the UE and the LMF serving the VMR may be a same LMF or different LMFs. This is not limited in this embodiment of this application.

Step 901: The VMR obtains cell configuration information.

The VMR obtains cell configuration information from OAM, where the cell configuration information includes a TAC and/or a cell ID of a cell of the VMR. In addition, a DU function of the VMR sends an F1 setup (configuration) procedure to the access network device, to activate the cell of the VMR. For the procedure, refer to a known technology. It may be understood that the VMR is currently connected to the access network device, and the VMR accesses a cell of the access network device. The access network device may also be referred to as a donor base station of a VMR node.

Step 902: The VMR sends a registration request message to the access network device.

An MT function of the VMR initiates a registration procedure to a network. Specifically, the VMR sends the registration request message to the access network device, where the registration request message carries the cell identifier (such as the cell ID) corresponding to the cell of the VMR, and the MT function of the VMR may also be understood as IAB-UE.

Step 903: The access network device sends an N2 message to the VMR-AMF.

The access network device selects an AMF for the MT function of the VMR, and the AMF serves the VMR (that is, the VMR-AMF is named). The access network device sends the N2 message to the VMR-AMF. The N2 message includes the registration request message, and the registration request message carries the cell identifier (such as the cell ID) corresponding to the cell of the VMR.

Step 904: The VMR-AMF sends, to the UDM, the cell identifier corresponding to the cell of the VMR and an identifier of the VMR-AMF.

For example, the VMR-AMF sends a request message to the UDM, to request the UDM to store the foregoing information. The request message carries one or more of the cell identifier corresponding to the cell of the VMR, the identifier of the VMR-AMF, and an identifier (such as an SUPI or a common public subscription identity (generic public subscription identifier, GPSI)) of the MT function of the VMR.

Step 905: The UDM stores the identifier of the VMR-AMF, the cell identifier, and the identifier of the VMR.

The UDM stores the identifier (such as the SUPI or the GPSI) of the MT function of the VMR, the identifier (an AMF ID) of the VMR-AMF, and the cell identifier (such as the cell ID) corresponding to the cell of the VMR. For example, different cell identifiers correspond to different identifiers (such as SUPIs or GPSIs) of MT functions of VMRs and identifiers (AMF IDs) of VMR-AMFs, as shown in Table 3 in FIG. 8.

It may be understood that, through step 902 to step 905, the VMR may report, to a core network, the cell identifier corresponding to the current cell, and trigger the core network to store a correspondence between the cell identifier and the identifier of the VMR-AMF. In addition, the UDM in the foregoing procedure may alternatively be replaced with a UDR network element or an NRF network element.

It should be understood that FIG. 9A and FIG. 9B show only an example of an implementation in which the cell identifier corresponding to the current cell is reported to the core network through the registration procedure, and this should not constitute any limitation on this embodiment of this application. For example, the VMR may alternatively report, to the core network through a service request (service request) procedure, the cell identifier corresponding to the current cell.

Step 906: The VMR-AMF accepts the registration procedure of the VMR, and sends a registration accept message to the VMR.

Step 907: The VMR sends a broadcast message.

Optionally, the broadcast message may carry indication information, where the indication information indicates that the cell is the cell of the VMR, namely, a mobile cell.

Step 908: The UE registers with the core network.

The UE accesses the cell of the VMR and initiates the registration procedure. For a specific process, refer to a known technology. It may be understood that the cell currently accessed by the UE is the cell of the VMR (where the cell of the VMR accessed by the UE and the cell of the access network device accessed by the VMR are different cells). Because the VMR has the mobility, a location of the cell of the VMR changes as the VMR moves.

Step 909: The UE-AMF sends a positioning request message to the UE-LMF.

The positioning request message is used to trigger the UE-LMF to position the UE.

For example, the UE-AMF triggers positioning for the UE at a moment. The procedure may be triggered by an external location client, or may be triggered by the UE. This is not limited in this application. The UE-AMF selects an LMF network element serving the UE (the UE-LMF), and sends the positioning request message to the UE-LMF, to trigger the UE-LMF to position the UE.

The positioning request message sent by the UE-AMF to the UE-LMF includes an LCS correlation identifier associated with the UE.

Step 910: If using a UE assisted positioning procedure, the UE-LMF sends a downlink positioning message (downlink positioning message, DL positioning message) to the UE-AMF.

Step 911: The UE-AMF sends the downlink positioning message to the UE.

Correspondingly, the UE receives the downlink positioning message.

Step 912: After receiving the downlink positioning message, the UE performs positioning measurement based on a positioning reference signal (PRS) sent by a surrounding cell, where the cell that is of the VMR and that is currently accessed by the UE also sends a PRS, and the UE may perform measurement by using the PRS from the cell of the VMR.

It should be understood that the UE may further perform measurement by using another PRS from a surrounding cell, for example, a PRS that is sent by a cell served by a base station and that is deployed on each side of a road outside a vehicle, that is, a cell at a fixed location.

It should be further understood that the UE may alternatively perform measurement by using a PRS from another cell of a VMR, that is, the cell that is of the VMR and that is accessed by the UE and the cell used for the positioning measurement may be a same cell or different cells.

For example, if the cell currently accessed by the UE is a cell 1, the cell 1 is a cell of a VMR, cells around the UE further include a cell 2 and a cell 3, the cell 2 is a cell of a VMR, and the cell 3 is a cell of a fixed base station, the UE may perform positioning measurement by using a PRS from any one or more cells of the cell 1, the cell 2, and the cell 3 to.

Step 913: The UE sends an uplink positioning message to the UE-AMF.

The uplink positioning message carries positioning measurement data, where the positioning measurement data includes a cell identifier, and the cell identifier indicates a PRS of which cell is used by the UE to perform measurement. In this embodiment, the UE performs measurement by using the PRS from the cell of the VMR. Therefore, the cell identifier in the positioning measurement data includes a cell identifier of the VMR (a cell ID of the VMR).

Optionally, the uplink positioning message further carries indication information, where the indication information indicates that the cell is the cell of the VMR, that is, a location of the cell changes as the VMR moves.

Step 914: The UE-AMF sends the uplink positioning message to the UE-LMF.

In this embodiment, if the UE assisted positioning procedure is used, the UE performs measurement by using the PRS from the cell of the VMR. Therefore, the cell identifier in the positioning measurement data includes the cell identifier of the VMR (the cell ID of the VMR).

The UE-AMF further sends, to the UE-LMF, the LCS correlation identifier associated with the UE.

It needs to be noted that, step 910 to step 914 in the figure are the UE assisted positioning procedure. Optionally, the UE-LMF may further use a network assisted positioning procedure. In this case, step 910 to step 914 may be replaced with the following step 1 to step 5:
Step 1: If using the network assisted positioning procedure, the UE-LMF sends a network positioning message (network positioning message) to the UE-AMF.
Step 2: The UE-AMF sends the network positioning message to the access network device.
Step 3: The access network device triggers, based on the network positioning message, the VMR to perform positioning measurement on the UE. It may be understood that the VMR collects positioning measurement data of the UE. For example, the VMR performs positioning measurement by using a signal sent by the UE, to obtain the positioning measurement data.
Step 4: The access network device sends a network positioning message to the UE-AMF.

The network positioning message carries positioning measurement data, where the positioning measurement data includes a cell identifier, and the cell identifier indicates a PRS of which cell is used by the UE to perform measurement.

Step 5: The UE-AMF sends the network positioning message to the UE-LMF.

If the network assisted positioning procedure is used, the VMR performs positioning measurement by using the signal sent by the UE. Therefore, the cell identifier in the positioning measurement data includes a cell identifier of the VMR (a cell ID of the VMR).

It can be learned that, regardless of whether the UE assisted positioning procedure or the network assisted positioning procedure is used, provided that positioning measurement is performed on the UE by using the cell of the VMR, the cell ID included in the positioning measurement data received by the UE-LMF includes the cell identifier corresponding to the cell of the VMR.

It needs to be noted that, if the UE-LMF uses both the UE assisted positioning procedure and the network assisted positioning procedure to trigger positioning on the UE, step 910 to step 914 and step 1 to step 5 may be performed concurrently.

The following continues to describe the embodiment shown in FIG. 9A and FIG. 9B.

Step 915: The UE-LMF fails to determine, based on the positioning measurement data, a geographical location of the cell that is included in the positioning measurement data.

The UE assisted positioning procedure is used as an example for description. The UE performs positioning measurement by using the signal of the cell of the VMR. Because the cell of the VMR is in a moving state, and the UE-LMF fails to determine the location of the cell, the location of the cell needs to be positioned (that is, positioning measurement is performed on the VMR).

In a possible design, the uplink positioning message includes the cell ID of the cell. The UE-LMF determines, based on the cell ID, that the cell is the cell of the VMR. In another possible design, the uplink positioning message further includes first indication information, where the first indication information indicates that the cell is the cell of the VMR, and the UE-LMF may determine, based on the first indication information, that the cell is the cell of the mobile relay. For specific descriptions of the foregoing two designs, refer to the embodiment shown in FIG. 8. Details are not described herein again.

Step 916: The UE-LMF sends a request message to the UDM.

The request message is for requesting to query the identifier of the VMR-AMF and/or the identifier of the VMR, and the request message carries the cell identifier of the cell of the VMR (the cell ID of the VMR).

Step 917: The UDM sends a response message to the UE-LMF.

The response message carries the identifier of the VMR-AMF and/or the identifier (such as the SUPI) of the VMR.

For example, the UDM stores a correspondence among the identifier (such as the SUPI or the GPSI) of the MT function of the VMR, the identifier (the AMF ID) of the VMR-AMF, and the cell identifier (such as the cell ID) corresponding to the cell of the VMR. As shown in Table 3 in the embodiment shown in FIG. 8, the UDM may query, based on the cell identifier, the identifier of the VMR-AMF and/or the identifier of the VMR corresponding to the cell identifier, and return the foregoing information to the UE-LMF.

Step 918: The UE-LMF sends a positioning request message 1 to a GMLC.

For example, the UE-LMF serves as a positioning service client to trigger a 5GC-MT-LR procedure, and the positioning request message 1 is used to trigger positioning for the VMR. For example, the positioning request message may be an LCS service request message.

It should be understood that content (namely, the positioning request message in step 918) carried in the positioning request message sent by the UE-LMF to the GMLC may be different from a parameter carried in a positioning request message (namely, the positioning request message in step 919) sent by the GMLC to the AMF serving the mobile relay. For ease of differentiation, the positioning request message sent by the UE-LMF to the GMLC is denoted as the positioning request message 1, and the positioning request message sent by the GMLC to the AMF serving the mobile relay is denoted as a positioning request message 2.

Specifically, a parameter carried in the positioning request message 1 may be implemented in the following several manners:
Manner 1: The positioning request message 1 carries the identifier of the VMR-AMF and the identifier of the VMR. In this case, the GMLC may determine, based on the identifier of the VMR-AMF, an AMF serving the VMR.
Manner 2: The positioning request message 1 carries the identifier of the VMR-AMF and the cell identifier corresponding to the cell of the VMR. In this case, the GMLC may determine, based on the identifier of the VMR-AMF, an AMF serving the VMR.
Manner 3: The positioning request message 1 carries the identifier of the VMR. In this case, the GMLC may further query and request the identifier of the VMR-AMF from the UDM based on the identifier of the VMR, to determine an AMF serving the VMR.

Based on step 905, the UDM stores the identifier of the VMR-AMF, the cell identifier, and the identifier of the VMR. The GMLC may send the identifier of the VMR to the UDM, and the UDM determines the identifier of the VMR-AMF based on the identifier of the VMR.

Manner 4: The positioning request message 1 carries the cell identifier corresponding to the cell of the VMR. In this case, the GMLC may further query and request the identifier of the VMR-AMF and the identifier of the VMR from the UDM based on the cell identifier corresponding to the cell of the VMR, to determine an AMF serving the VMR.

Based on step 905, the UDM stores the identifier of the VMR-AMF, the cell identifier, and the identifier of the VMR. The GMLC may send, to the UDM, the cell identifier corresponding to the cell of the VMR, and the UDM determines the identifier of the VMR-AMF based on the cell identifier corresponding to the cell of the VMR.

In addition, the UDM in the foregoing several implementations may alternatively be replaced with a UDR network element or an NRF network element.

Step 919: The GMLC sends the positioning request message 2 to the VMR-AMF.

After determining the VMR-AMF, the GMLC sends the positioning request message 2 to the VMR-AMF. A parameter carried in the positioning request message 2 is implemented in the following several manners:
(1) The positioning request message 2 carries the identifier of the VMR. For example, based on these methods in Manner 1, Manner 3, and Manner 4 in step 918, the GMLC obtains the identifier of the VMR.
(2) The positioning request message 2 carries the cell identifier corresponding to the cell of the VMR. For example, based on this method in Manner 2 in step 918, the GMLC obtains the cell identifier corresponding to the cell of the VMR.

For example, the positioning request message sent by the GMLC to the VMR-AMF may be a request message for invoking an "Namf_Location_ProvidePositioningInfo" service-oriented operation.

Step 920: The VMR-LMF initiates a positioning procedure.

The VMR-AMF selects a positioning network element LMF (the VMR-LMF), and the LMF is responsible for positioning the VMR (that is, the LMF is responsible for positioning the VMR-MT or the IAB-UE). The VMR-LMF initiates the positioning procedure, where the positioning procedure is a positioning procedure for the VMR, and the positioning procedure may be the UE assisted positioning procedure (the VMR-MT performs positioning measurement by using a PRS from the cell of the access network device) and/or the network assisted positioning procedure (the access network device measures a location of the VMR-MT). For a specific process, refer to a known technology. Details are not described herein again.

The VMR-LMF calculates location information of the VMR based on the current positioning measurement data. Further, the VMR-LMF sends the location information of the VMR to the VMR-AMF. Correspondingly, the VMR-AMF obtains the location information of the VMR.

Step 921: The VMR-AMF sends a positioning response message to the GMLC.

The positioning response message carries the location information of the VMR. The positioning response message is a response message of the positioning request message 2 in step 919.

Step 922: The GMLC sends the positioning response message to the UE-LMF. Specifically, the GMLC sends a location service (location service, LCS) response to the UE-LMF.

The positioning response message is a response message of the positioning request message 1 in step 918. Correspondingly, the UE-LMF receives the positioning response message, to obtain the location information of the VMR. In other words, the VMR-AMF sends the positioning response message to the UE-LMF via the GMLC.

Step 923: The UE-LMF determines a location of the UE based on the location information of the VMR and the positioning measurement data of the UE.

The UE-LMF calculates the location of the UE based on the location information of the VMR and the positioning measurement data of the UE.

A specific method for the UE-LMF to calculate the location of the UE based on the location information of the VMR and the positioning measurement data of the UE is not limited in this embodiment.

Step 924: The UE-LMF sends the location of the UE to the UE-AMF.

As shown in FIG. 10A and FIG. 10B, the method shown in FIG. 10A and FIG. 10B includes step 1001 to step 1024. The following describes in detail the steps in the method shown in FIG. 10A and FIG. 10B. A difference between the embodiment shown in FIG. 10A and FIG. 10B and the embodiment shown in FIG. 9A and FIG. 9B lies in that manners of obtaining the first information is different. In the embodiment shown in FIG. 10A and FIG. 10B, the UE-LMF obtains the first information from the access network device.

It should be understood that, in the method shown in FIG. 10A and FIG. 10B, an example in which the mobile relay is a VMR is used. A UE-AMF is an AMF serving UE, a VMR-AMF is an AMF serving the VMR, a UE-LMF is an LMF serving a terminal device, and a VMR-LMF is an LMF serving the VMR.

It should be further understood that in this embodiment, the AMF serving the UE and the AMF serving the VMR may be a same AMF or different AMFs. Similarly, the LMF serving the UE and the LMF serving the VMR may be a same LMF or different LMFs. This is not limited in this embodiment.

Step 1001: The VMR obtains cell configuration information.

Step 1002: The VMR sends a registration request message to the access network device.

The registration request message carries a cell identifier (such as a cell ID) corresponding to a cell of the VMR.

Step 1003: The access network device sends an N2 message to the VMR-AMF.

The N2 message includes a registration request message, and the registration request message carries the cell identifier (such as the cell ID) corresponding to the cell of the VMR.

For a specific process of step 1001 to step 1003, refer to related descriptions of step 901 to step 903 in FIG. 9A and FIG. 9B. Details are not described herein again.

Step 1004: The VMR-AMF stores the cell identifier and an identifier of the VMR.

Step 1005: The VMR-AMF accepts the registration procedure of the VMR, and sends a registration accept message to the VMR.

Step 1006: The VMR sends a broadcast message.

Optionally, the broadcast message may carry indication information, where the indication information indicates that the cell is the cell of the VMR, that is, the cell has mobility.

Step 1007: The UE registers with a core network.

The UE accesses the cell of the VMR and initiates the registration procedure. For a specific process, refer to a known technology. It may be understood that the cell currently accessed by the UE is the cell of the VMR (where the cell of the VMR accessed by the UE and a cell of the access network device accessed by the VMR are different cells). Because the VMR has the mobility, the cell of the VMR is also in a moving state.

Step 1008: The UE-AMF sends a positioning request message to the UE-LMF.

The UE-AMF triggers positioning for the UE at a moment. The UE-AMF selects an LMF network element serving the UE (the UE-LMF), and sends the positioning request message to the UE-LMF, to trigger the UE-LMF to position the UE.

The positioning request message sent by the UE-AMF to the UE-LMF includes an LCS correlation identifier associated with the UE.

Step 1009: If using a UE assisted positioning procedure, the UE-LMF sends a downlink positioning message (DL positioning message) to the UE-AMF.

Step 1010: The UE-AMF sends the downlink positioning message to the UE.

Correspondingly, the UE receives the downlink positioning message.

Step 1011: The UE performs positioning measurement.

After receiving the downlink positioning message, the UE performs positioning measurement based on a positioning reference signal (PRS) sent by a surrounding cell, where the cell that is of the VMR and that is currently accessed by the UE also sends a PRS, and the UE may perform measurement by using the PRS from the cell of the VMR.

Step 1012: The UE sends an uplink positioning message to the UE-AMF.

The uplink positioning message carries positioning measurement data, where the positioning measurement data includes a cell identifier, and the cell identifier indicates a PRS of which cell is used by the UE to perform measurement.

Optionally, the uplink positioning message further carries indication information, where the indication information indicates that the cell is the cell of a VMR, that is, the cell has mobility.

Step 1013: The UE-AMF sends the uplink positioning message to the UE-LMF.

In this embodiment, if the UE assisted positioning procedure is used, the UE performs measurement by using the PRS from the cell of the VMR. Therefore, the cell identifier in the positioning measurement data includes the cell identifier of the VMR (the cell ID of the VMR).

The UE-AMF further sends, to the UE-LMF, the LCS correlation identifier associated with the UE.

It needs to be noted that, for related descriptions of step 1009 to step 1013, refer to related descriptions of step 910 to step 914 in the embodiment shown in FIG. 9A and FIG. 9B. Details are not described herein again.

It needs to be noted that, the UE-LMF may alternatively use both the UE assisted positioning procedure and a network assisted positioning procedure to trigger positioning for the UE.

Step 1014: The UE-LMF fails to determine, based on the positioning measurement data, a geographical location of the cell that is included in the positioning measurement data.

The UE assisted positioning procedure is used as an example for description. The UE performs positioning measurement by using the signal of the cell of the VMR. Because the cell of the VMR is in a moving state, and the UE-LMF fails to determine the location of the cell, the location of the cell needs to be positioned (that is, positioning measurement is performed on the VMR).

In a possible design, the uplink positioning message includes the cell ID of the cell. The UE-LMF determines, based on the cell ID, that the cell is the cell of the VMR. In another possible design, the uplink positioning message further includes first indication information, where the first indication information indicates that the cell is the cell of the VMR, and the UE-LMF may determine, based on the first indication information, that the cell is the cell of the mobile relay.

For a specific process of step 1014, refer to descriptions of the embodiment shown in FIG. 8. Details are not described herein again.

Step 1015: The UE-LMF sends a request message to the access network device.

The request message is for requesting to query an identifier of the VMR-AMF, and the request message carries the cell identifier of the cell of the VMR (the cell ID of the VMR).

Specifically, the UE-LMF may send the request message to the access network device by using the UE-AMF.

Step 1016: The access network device sends a response message to the UE-LMF.

The response message carries the identifier of the VMR-AMF. Specifically, the access network device may send the response message to the UE-LMF via the UE-AMF.

It needs to be noted that the access network device locally stores context information of the VMR, where the context information includes the cell identifier of the VMR and the identifier of the VMR-AMF. When receiving the request message from the UE-LMF, the access network device may determine, based on the context information of the VMR, the identifier that is of the VMR-AMF and that corresponds to the cell ID of the VMR.

Step 1017: The UE-LMF sends a positioning request message 1 to a GMLC.

For example, the UE-LMF serves as a positioning service client to trigger a 5GC-MT-LR procedure, and the positioning request message 1 is used to trigger positioning for the VMR. For example, the positioning request message 1 may be an LCS service request message.

It may be understood that content carried in the positioning request message sent by the UE-LMF to the GMLC may be different from content carried in the positioning request message sent by the GMLC to the AMF serving the mobile relay. For ease of differentiation, the positioning request message sent by the UE-LMF to the GMLC is denoted as the positioning request message 1, and the positioning request message sent by the GMLC to the AMF serving the mobile relay is denoted as a positioning request message 2.

Specifically, the positioning request message 1 carries the identifier of the VMR-AMF and the cell identifier corresponding to the cell of the VMR. In this case, the GMLC may determine, based on the identifier of the VMR-AMF, an AMF serving the VMR.

Step 1018: The GMLC sends the positioning request message 2 to the VMR-AMF.

After determining the VMR-AMF, the GMLC sends the positioning request message 2 to the VMR-AMF, where the positioning request message 2 carries the cell identifier corresponding to the cell of the VMR.

For example, the positioning request message 2 sent by the GMLC to the VMR-AMF may be a request message for invoking an "Namf_Location_ProvidePositioningInfo" service-oriented operation.

Step 1019: The VMR-AMF determines the VMR based on the identifier of the cell, and selects the VMR-LMF.

Specifically, the VMR-AMF determines the corresponding VMR based on this correspondence between the cell identifier and the identifier of the VMR stored in step 1004, and the cell identifier carried in the positioning request message 2.

Step 1020: The VMR-LMF initiates a positioning procedure. The VMR-LMF calculates location information of the VMR based on the current positioning measurement data. Further, the VMR-LMF sends the location information of the VMR to the VMR-AMF. Correspondingly, the VMR-AMF obtains the location information of the VMR.

Step 1021: The VMR-AMF sends a positioning response message to the GMLC.

The positioning response message carries the location information of the VMR. The positioning response message is a response message of the positioning request message 2 in step 1018.

Step 1022: The GMLC sends the positioning response message to the UE-LMF. Specifically, the GMLC sends a location service (location service, LCS) response to the UE-LMF.

The positioning response message is a response message of the positioning request message 1 in step 1017. Correspondingly, the UE-LMF receives the positioning response message, to obtain the location information of the VMR. In other words, the VMR-AMF sends the positioning response message to the UE-LMF via the GMLC.

Step 1023: The UE-LMF determines a location of the UE based on the location information of the VMR and the positioning measurement data of the UE.

Step 1024: The UE-LMF sends the location of the UE to the UE-AMF.

It needs to be noted that, for a detailed process of step 1015 to step 1024, refer to related descriptions of step 918 to step 924 in the embodiment shown in FIG. 9A and FIG. 9B. Details are not described herein again.

Based on the foregoing technical solution, if the measurement data of the first positioning procedure of the terminal device includes the information about the cell of the mobile relay, the LMF serving the terminal device further obtains the first information associated with the mobile relay, for example, the identifier of the AMF serving the mobile relay, and sends the first request message based on the first information, to trigger the positioning procedure for the mobile relay, to obtain the location information of the mobile relay. In this way, the LMF may determine the location of the terminal device based on the location information of the mobile relay and the positioning measurement data of the terminal device. The foregoing solution provides a method for determining the location of the terminal device in a scenario in which the positioning measurement data of the terminal device is associated with the mobile relay, to resolve a problem that the LMF cannot calculate the location of the terminal device because a location of the cell of the mobile relay is not fixed, and help accurately calculate the location of the terminal device.

The following describes in detail another communication method (namely, the communication method in Design 2 mentioned above) provided in embodiments of this application. To be specific, after determining that the first cell accessed by the terminal device is the cell of the mobile relay, the AMF serving the terminal device (denoted as the UE-AMF) obtains the first information identifying the mobile relay, and sends the first positioning request message to the LMF serving the terminal device (denoted as the UE-LMF), where the first positioning request message includes the first information, to trigger the first positioning procedure for the terminal device, and the second positioning procedure for the mobile relay, to obtain the location information of the mobile relay.

FIG. 11 is a schematic flowchart of a communication method 1100 according to an embodiment of this application. The method 1100 shown in FIG. 11 may include step 1101 to step 1104. The following describes in detail the steps in the method 1100.

Step 1101: A UE-AMF determines that a first cell accessed by a terminal device is a cell of a mobile relay.

The mobile relay is configured to provide a relay service between the terminal device and an access network device, and the mobile relay has mobility.

In a possible implementation, the UE-AMF receives a first message from the access network device, where the first message includes an identifier of the first cell accessed by the terminal device and indication information, and the indication information indicates that the first cell is the cell of the mobile relay. It may be understood that the access network device determines that the first cell accessed by the terminal device is the cell of the mobile relay, and therefore sends the identifier of the first cell and the indication information to the UE-AMF.

For example, the UE-AMF receives an N2 message from the access network device, where the N2 message includes the first message, that is, includes the cell identifier of the first cell and the indication information, and the indication information indicates that the first cell is the cell of the mobile relay. Optionally, the N2 message further includes a registration request message.

In another possible implementation, the UE-AMF receives a first message from the access network device, where the first message includes an identifier of the first cell accessed by the terminal device and an identifier of a second cell accessed by the mobile relay, and the second cell is a cell of the access network device. The UE-AMF may determine, based on the identifier of the second cell accessed by the mobile relay, that the first cell accessed by the terminal device is the cell of the mobile relay. It may be understood that the access network device determines that the first cell accessed by the terminal device is the cell of the mobile relay, and therefore sends the identifier of the first cell and the identifier of the second cell to the UE-AMF. In other words, the first message includes the identifiers of the two cells only when the terminal device accesses the cell of the mobile relay, and one of the cell identifiers (the identifier of the second cell accessed by the mobile relay) is the identifier of the cell of the access network device. It indicates that the other identifier of the cell is the identifier of the cell of the mobile relay.

Step 1102: The UE-AMF obtains first information.

The first information includes the identifier of the AMF serving the mobile relay and/or the identifier of the mobile relay.

In a possible design, the UE-AMF obtains the first information from the UDM, the UDR, or the NRF. The UDM is used as an example. The UDM prestores the correspondence among the cell identifier, the identifier of the AMF serving the mobile relay, and the identifier of the mobile relay. For example, the UE-AMF sends a request message to the UDM, where the request message includes the cell identifier of the first cell. The UDM may determine, based on the cell identifier of the first cell, an identifier of a corresponding AMF serving a mobile relay and an identifier of the mobile relay. Further, the UDM sends, to the UE-AMF, at least one of the identifier of the AMF serving the mobile relay and the identifier of the mobile relay. Correspondingly, the UE-AMF receives a response message from the UDM, where the response message includes the first information, and the first information includes the at least one of the identifier of the AMF serving the mobile relay and the identifier of the mobile relay. The UDM prestores the correspondences among the cell identifiers, the identifiers of the AMFs serving the mobile relays, and the identifiers of the mobile relays, as shown in Table 3.

It needs to be noted that a method for the UDM to store the foregoing correspondence may be as follows. A VMR is used as an example. An MT function of the VMR initiates a registration procedure to a network. Specifically, the VMR sends a registration request message to the access network device, where the registration request message carries a cell identifier (such as a cell ID) corresponding to a cell of the VMR. The access network device selects an AMF for the MT function of the VMR, and sends the registration request message to the AMF serving the VMR, where the registration request message carries the cell identifier (such as the cell ID) corresponding to the cell of the VMR. The AMF serving the VMR sends, to the UDM, the cell identifier corresponding to the cell of the VMR. In this case, the UDM stores an identifier of the MT function of the VMR, an identifier of the AMF serving the VMR, and the cell identifier corresponding to the cell of the VMR.

In another possible design, the UE-AMF obtains the first information from the access network device. For example, the UE-AMF sends a request message to the access network device, where the request message includes the cell identifier of the first cell. The access network device determines, based on the cell identifier of the first cell, an identifier that is of an AMF serving a mobile relay and that corresponds to the cell identifier, and sends a response message to the UE-AMF, where the response message includes the first information, and the first information includes the identifier of the AMF serving the mobile relay. Correspondingly, the UE-AMF receives the response message from the access network device, to obtain the identifier of the AMF serving the mobile relay.

It needs to be noted that the access network device locally stores context information of the mobile relay, where the context information includes the cell identifier of the mobile relay and the identifier of the AMF serving the mobile relay. When receiving the request message from the UE-LMF, the access network device may determine, based on the context information of the mobile relay, the identifier that is of the AMF serving the mobile relay and that corresponds to the cell ID of the VMR.

In addition, in another implementation, the access network device may further actively send, to the UE-AMF, the identifier of the AMF serving the mobile relay. For example, in step 1101, when determining that the first cell accessed by the terminal device is the cell of the mobile relay, the access network device sends the N2 message to the UE-AMF, where the N2 message carries the identifier of the AMF serving the mobile relay. It may be understood that, when determining that the first cell accessed by the terminal device is the cell of the mobile relay, the access network device actively sends, to the UE-AMF, the identifier of the AMF serving the mobile relay.

Step 1103: The UE-AMF sends a first request message to the UE-LMF, where the first request message includes the first information.

The first request message (which may also be referred to as a first positioning request message herein) is used to trigger a first positioning procedure for the terminal device. The first request message includes the first information, and the first information is used to trigger a second positioning procedure for the mobile relay.

For example, in an implementation method, the UE-AMF sends the first positioning request message to the UE-LMF, where the first information included in the first positioning request message includes the identifier of the AMF serving the mobile relay and the identifier of the mobile relay. The first positioning request message further includes an LCS correlation identifier associated with the terminal device. Correspondingly, after receiving the first positioning request message, the UE-LMF separately triggers positioning for the terminal device and the mobile relay. For specific steps of the positioning procedure for the terminal device, refer to related descriptions in FIG. 9A and FIG. 9B. Because the first positioning request message carries the identifier of the AMF serving the mobile relay and the identifier of the mobile relay, the UE-LMF may directly trigger, based on the identifier of the AMF, the AMF to initiate a positioning procedure for the mobile relay. For example, the UE-LMF may trigger the positioning procedure for the mobile relay by using a 5GC-MT-LR procedure.

For example, in another implementation method, the UE-AMF sends the first positioning request message to the UE-LMF, where the first information included in the first positioning request message includes the identifier of the mobile relay. The first positioning request message further carries an LCS correlation identifier associated with the terminal device. Correspondingly, after receiving the first positioning request message, the UE-LMF separately triggers positioning for the terminal device and the mobile relay. For specific steps of the positioning procedure for the terminal device, refer to related descriptions in FIG. 9A and FIG. 9B. Because the first positioning request message carries only the identifier of the mobile relay, the UE-LMF may serve as a location client to trigger a core network to initiate the positioning procedure for the mobile relay. For example, the UE-LMF may trigger the positioning procedure for the mobile relay by using the 5GC-MT-LR procedure. For the specific positioning procedure for the mobile relay, refer to related descriptions in FIG. 9A and FIG. 9B.

In other words, a difference between Design 2 and Design 1 lies in that, the UE-LMF may directly trigger the AMF (or the UE-LMF serves as the location client to trigger the core network) to initiate the positioning procedure for the mobile relay to determine a location of the mobile relay without waiting for a location of the mobile relay that cannot be determined based on the positioning measurement data.

Step 1104: The UE-LMF sends a second request message based on the first information.

Specifically, the UE-LMF sends the second request message (which may also be referred to as a second positioning request message herein) to a GMLC based on the first information, to trigger positioning for the mobile relay.

For example, the second positioning request message may be an LCS service request message. The second positioning request message may be, for example, a positioning request message 2 described below.

For example, if the first information includes the identifier of the AMF serving the mobile relay and the identifier of the mobile relay in step 1103, the UE-LMF sends a positioning request message 2 to the GMLC based on the first information, where the positioning request message 2 carries the identifier of the AMF serving the mobile relay and the identifier of the mobile relay. The GMLC determines, based on the identifier of the AMF serving the mobile relay, a specific AMF, serving the mobile relay, to which a positioning request message 3 is to be sent, and further sends the positioning request message 3 to the AMF serving the mobile relay, where the positioning request message 3 carries the identifier of the mobile relay.

If the first information includes the identifier of the mobile relay in step 1103, the UE-LMF sends the positioning request message 2 to the GMLC based on the first information, where the positioning request message 2 carries the identifier of the mobile relay. The GMLC queries, from a first network element based on the identifier of the mobile relay, the identifier of the AMF serving the mobile relay, further determines, based on the identifier of the AMF serving the mobile relay, a specific AMF, serving the mobile relay, to which a positioning request message 3 is to be sent, and sends a positioning request message 3 to the AMF serving the mobile relay, where the positioning request message 3 carries the identifier of the mobile relay. The first network element stores the identifier of the AMF serving the mobile relay and the identifier of the mobile relay. The GMLC may send the identifier of the mobile relay to the first network element, and the first network element determines, based on the identifier of the mobile relay, the identifier of the AMF serving the mobile relay.

It may be understood that content carried in the positioning request message sent by the UE-LMF to the GMLC is different from content carried in the positioning request message sent by the GMLC to the AMF serving the mobile relay. For ease of differentiation, the positioning request message sent by the UE-LMF to the GMLC is denoted as the positioning request message 2, and the positioning request message sent by the GMLC to the AMF serving the mobile relay is denoted as the positioning request message 3.

In addition, the method shown in FIG. 11 further includes: An LMF serving the terminal device receives location information of the mobile relay determined based on measurement data of the second positioning procedure; and determines location information of the terminal device based on measurement data of the first positioning procedure and the location information of the mobile relay.

The LMF serving the mobile relay initiates the second positioning procedure for the mobile relay. For example, the mobile relay may perform measurement based on a signal of a cell of the access network device (that is, the terminal device assisted positioning procedure is used), to obtain measurement data of the second positioning procedure. For another example, the access network device may perform measurement based on a signal sent by the mobile relay (that is, the network assisted positioning procedure is used), to obtain measurement data of the second positioning procedure.

In addition, it needs to be noted that, the LMF serving the mobile relay may alternatively use both a UE assisted positioning procedure and a network assisted positioning procedure to initiate the second positioning procedure. That is, it may be understood that if the second positioning procedure in this application includes both the terminal device assisted positioning procedure and the network assisted positioning procedure, the measurement data of the second positioning procedure includes the positioning measurement data sent by the mobile relay to the LMF serving the mobile relay and the positioning measurement data sent by the access network device to the LMF serving the mobile relay.

The LMF serving the mobile relay further determines location information of the mobile relay based on the measurement data of the second positioning procedure, and sends, via the GMLC, the location information of the mobile relay to the LMF serving the terminal device.

The LMF serving the terminal device receives the location information of the mobile relay, and then calculates a location of the terminal device based on the measurement data of the first positioning procedure (namely, the positioning measurement data of the terminal device).

FIG. 12A and FIG. 12B are a detailed schematic flowchart of the communication method in the embodiment shown in FIG. 11.

As shown in FIG. 12A and FIG. 12B, the method shown in FIG. 12A and FIG. 12B includes step 1201 to step 1223. The following describes in detail the steps in the method shown in FIG. 12A and FIG. 12B. It should be understood that, in the method shown in FIG. 12A and FIG. 12B, an example in which the mobile relay is a VMR is used. A UE-AMF is an AMF serving UE, a VMR-AMF is an AMF serving the VMR, a UE-LMF is an LMF serving a terminal device, and a VMR-LMF is an LMF serving the VMR.

It should be further understood that in this embodiment of this application, the AMF serving the UE and the AMF serving the VMR may be a same AMF or different AMFs. Similarly, the LMF serving the UE and the LMF serving the VMR may be a same LMF or different LMFs. This is not limited in this embodiment of this application.

Step 1201: The VMR obtains cell configuration information.

Step 1202: The VMR sends a registration request message to an access network device.

The registration request message carries a cell identifier (such as a cell ID) corresponding to a cell of the VMR.

Step 1203: The access network device sends an N2 message to the VMR-AMF.

The N2 message includes a registration request message, and the registration request message carries the cell identifier (such as the cell ID) corresponding to the cell of the VMR.

Step 1204: The VMR-AMF sends, to the UDM, the cell identifier corresponding to the cell of the VMR and an identifier of the VMR-AMF.

Step 1205: The UDM stores the identifier of the VMR-AMF, the cell identifier, and an identifier of the VMR.

The UDM stores the identifier (such as an SUPI or a GPSI) of an MT function of the VMR, the identifier (an AMF ID) of the VMR-AMF, and the cell identifier (such as the cell ID) corresponding to the cell of the VMR. For example, different cell identifiers correspond to different identifiers (such as SUPIs or GPSIs) of MT functions of VMRs and identifiers (AMF IDs) of VMR-AMFs, as shown in Table 3 in FIG. 8.

Step 1206: The VMR-AMF accepts the registration procedure of the VMR, and sends a registration accept message to the VMR.

For a specific process of step 1201 to step 1206, refer to related descriptions of step 901 to step 906 in FIG. 9A and FIG. 9B. Details are not described herein again.

Step 1207: The VMR sends a broadcast message.

Optionally, the broadcast message may carry indication information, where the indication information indicates that the cell is the cell of the VMR, that is, the cell has mobility.

Step 1208: The UE accesses the cell of the VMR.

The UE accesses the cell of the VMR and initiates the registration procedure. For a specific process, refer to a known technology. It may be understood that the cell currently accessed by the UE is the cell of the VMR (where the cell of the VMR accessed by the UE and a cell of the access network device accessed by the VMR are different cells). Because the VMR has the mobility, the cell of the VMR is also in a moving state.

Step 1209: The UE sends a registration request message to the access network device.

Step 1210: The access network device sends an N2 message to the UE-AMF.

In a possible implementation, the N2 message carries the cell identifier, the registration request message, and indication information, and the indication information indicates that the cell accessed by the terminal device is the cell of the VMR.

In another possible implementation, the UE-AMF receives the N2 message from the access network device, where the N2 message includes the identifier of the cell of the VMR and an identifier of the cell accessed by the VMR, and the cell accessed by the VMR is the cell of the access network device. The UE-AMF may determine, based on the identifier of the cell accessed by the VMR, that the cell accessed by the terminal device is the cell of the VMR.

Step 1211: The UE-AMF sends a request message to the UDM.

The UE-AMF triggers positioning for the UE at a moment. The UE-AMF sends the request message to the UDM, where the request message carries the cell identifier of the VMR.

Step 1212: The UDM sends a response message to the UE-AMF.

The response message carries the identifier of the VMR and/or the identifier of the VMR-AMF.

For example, the UDM stores, in step 1205, a correspondence among the identifier (such as the SUPI or the GPSI) of the MT function of the VMR, the identifier (the AMF ID) of the VMR-AMF, and the cell identifier (such as the cell ID) corresponding to the cell of the VMR. As shown in Table 3 in the embodiment shown in FIG. 8, the UDM may query, based on the cell identifier of the VMR, the identifier of the VMR-AMF and/or the identifier of the VMR corresponding to the cell identifier of the VMR, and returns the foregoing information to the UE-AMF.

In addition, the UDM in the foregoing step may alternatively be replaced with a UDR network element or an NRF network element.

Step 1213: The UE-AMF sends a positioning request message to the UE-LMF.

The UE-AMF selects an LMF network element (UE-LMF) serving the UE, and sends the positioning request message to the UE-LMF.

In an implementation method, the positioning request message carries the identifier of the VMR, the identifier of the VMR-AMF, and an LCS correlation identifier associated with the terminal device, to separately trigger positioning for the UE and the VMR.

In another implementation method, the positioning request message carries the identifier of the VMR and an LCS correlation identifier associated with the UE, to separately trigger positioning for the UE and the VMR.

Step 1214: The UE-LMF separately triggers positioning for the UE and the VMR.

Step 1215: If using a UE assisted positioning procedure, the UE-LMF sends a downlink positioning message (DL positioning message) to the UE-AMF.

Step 1216: The UE-LMF positions the UE. For a specific positioning procedure, refer to related descriptions in FIG. 9A and FIG. 9B. Details are not described herein again.

Step 1217: The UE-LMF sends a positioning request message 2 to a GMLC.

For example, the UE-LMF serves as a positioning service client to trigger a 5GC-MT-LR procedure, and the positioning request message 2 is used to trigger positioning for the VMR. For example, the positioning request message 2 may be an LCS service request message.

Specifically, a parameter carried in the positioning request message 2 may be implemented in the following several manners:
Manner 2: The positioning request message 1 carries the identifier of the VMR-AMF and the identifier of the VMR. In this case, the GMLC may determine, based on the identifier of the VMR-AMF, an AMF serving the VMR.
Manner 2: The positioning request message 2 carries the identifier of the VMR-AMF and the cell identifier corresponding to the cell of the VMR. In this case, the GMLC may determine, based on the identifier of the VMR-AMF, an AMF serving the VMR.
Manner 3: The positioning request message 2 carries the identifier of the VMR. In this case, the GMLC may further query and request the identifier of the VMR-AMF from the UDM based on the identifier of the VMR, to determine an AMF serving the VMR.

The UDM stores the identifier of the VMR-AMF, the cell identifier, and the identifier of the VMR. The GMLC may send the identifier of the VMR to the UDM, and the UDM determines the identifier of the VMR-AMF based on the identifier of the VMR.

Manner 4: The positioning request message 2 carries the cell identifier corresponding to the cell of the VMR. In this case, the GMLC may further query and request the identifier of the VMR-AMF and the identifier of the VMR from the UDM based on the cell identifier corresponding to the cell of the VMR, to determine an AMF serving the VMR.

The UDM stores the identifier of the VMR-AMF, the cell identifier, and the identifier of the VMR. The GMLC may send, to the UDM, the cell identifier corresponding to the cell of the VMR, and the UDM determines the identifier of the VMR-AMF based on the cell identifier corresponding to the cell of the VMR.

In addition, the UDM in step 1217 may alternatively be replaced with the UDR network element or the NRF network element.

It should be understood that content carried in the positioning request message sent by the UE-LMF to the GMLC may be different from content carried in the positioning request message sent by the GMLC to the AMF serving the mobile relay. For ease of differentiation, the positioning request message sent by the UE-LMF to the GMLC is denoted as the positioning request message 2, and the positioning request message sent by the GMLC to the AMF serving the mobile relay is denoted as the positioning request message 3.

Step 1218: The GMLC sends the positioning request message 3 to the VMR-AMF.

After determining the VMR-AMF, the GMLC sends the positioning request message 3 to the VMR-AMF. A parameter carried in the positioning request message 3 is implemented in the following several manners:
(1) The positioning request message 3 carries the identifier of the VMR. For example, based on these methods in Manners 1, 3, and 4, the GMLC obtains the identifier of the VMR.
(2) The positioning request message 3 carries the cell identifier corresponding to the cell of the VMR. For example, based on this method in the foregoing Manner 2, the GMLC obtains the cell identifier corresponding to the cell of the VMR.

Step 1219: The VMR-AMF initiates a positioning procedure.

The VMR-AMF selects a positioning network element LMF (the VMR-LMF), and the LMF is responsible for positioning the VMR (namely, a VMR-MT). The VMR-LMF initiates the positioning procedure, where the positioning procedure is a positioning procedure for the VMR, and the positioning procedure may be the UE assisted positioning procedure (the VMR-MT performs positioning measurement by using a PRS from the cell of the access network device) and/or the network assisted positioning procedure (the access network device measures a location of the VMR-MT). For a specific process, refer to a known technology. Details are not described herein again. The VMR-LMF calculates location information of the VMR based on the current positioning measurement data. Further, the VMR-LMF sends the location information of the VMR to the VMR-AMF. Correspondingly, the VMR-AMF obtains the location information of the VMR.

Step 1220: The VMR-AMF sends a positioning response message to the GMLC.

The positioning response message carries the location information of the VMR. The positioning response message is a response message of the positioning request message 3 in step 1218.

Step 1221: The GMLC sends the positioning response message to the UE-LMF. Specifically, the GMLC sends a location service (location service, LCS) response to the UE-LMF. The positioning response message is a response message of the positioning request message 2 in step 1217.

Correspondingly, the UE-LMF receives the positioning response message, to obtain the location information of the VMR. In other words, the VMR-AMF sends the positioning response message to the UE-LMF via the GMLC.

It needs to be noted that step 1215 and step 1216, and step 1217 to step 1221 may be performed simultaneously, or may be performed separately. When the steps are performed separately, a sequence of the steps is not limited in this embodiment of this application. In other words, a sequence of the positioning procedure for the UE and the positioning procedure for the VMR is not limited.

Step 1222: The UE-LMF determines a location of the UE based on the location information of the VMR and the positioning measurement data of the UE.

It needs to be noted that, for a detailed process of step 1222, refer to related descriptions in FIG. 9A and FIG. 9B. Details are not described herein again.

Step 1223: The UE-LMF sends the location of the UE to the UE-AMF.

Based on the foregoing technical solution, after determining that the first cell accessed by the terminal device is the cell of the mobile relay, the AMF serving the terminal device obtains the first information identifying the mobile relay, and sends the first request message to the LMF serving the terminal device, where the first request message includes the first information, to trigger the first positioning procedure for the terminal device, and the second positioning procedure for the mobile relay, so that the LMF serving the terminal device obtains location information of the mobile relay. This resolves a problem that the LMF serving the terminal device cannot calculate the location of the terminal device because a location of the cell of the mobile relay is not fixed, and helps accurately calculate the location of the terminal device.

The following describes in detail still another communication method (namely, the communication method in Design 3 mentioned above) provided in embodiments of this application. To be specific, the terminal device receives location information from the mobile relay, and performs positioning measurement based on a signal from a cell of the mobile relay, to obtain positioning measurement data. The terminal device sends a first message to the LMF, where the first message carries the location information of the mobile relay and the positioning measurement data, so that the LMF determines the location information of the terminal device based on the location information and the positioning measurement data.

FIG. 13 is a schematic flowchart of a communication method 1300 according to an embodiment of this application. The method 1300 shown in FIG. 13 may include step 1301 to step 1303. The following describes in detail the steps in the method 1300.

Step 1301: A terminal device receives location information from a mobile relay, where the location information indicates a location of the mobile relay.

The mobile relay has mobility.

The mobile relay may obtain the location information of the mobile relay in the following manner: An MT function of the mobile relay initiates a positioning procedure, and requests to obtain the location information of the mobile relay from a network. For a specific process, refer to an existing mobile originated location (mobile originated location request, MO-LR) procedure. Details are not described herein again. An AMF serving the mobile relay returns the location information of the mobile relay to the mobile relay, so that the mobile relay obtains the location information of the mobile relay.

A possible implementation in which the terminal device receives the location information from the mobile relay is as follows: The mobile relay broadcasts the location information (which, for example, may be represented by geographical location information) of the mobile relay via a broadcast message.

Optionally, the broadcast message may further carry a timer (timer), and the timer indicates a validity period of the location information.

Optionally, the broadcast message further carries indication information, where the indication information indicates that the mobile relay has the mobility, that is, the cell of the mobile relay has mobility.

In an implementation, in this embodiment of this application, the broadcast message may be a system broadcast message, and the system broadcast is always sent. In other words, the location information of the mobile relay obtained by the terminal device from the system broadcast message is information about a current location of the mobile relay. In a case in which the mobile relay moves, the location information of the mobile relay in the system broadcast message also changes. In this way, the location information of the mobile relay obtained by the terminal device from the system broadcast message is always the current location information.

In another implementation, in this embodiment of this application, the broadcast message may be a positioning reference signal (PRS) broadcast message, and the PRS broadcast message may be sent to the terminal device only in a positioning procedure. In other words, the location information of the mobile relay obtained by the terminal device from the PRS broadcast message is information about a current location of the mobile relay. In a case in which the mobile relay moves, the location information of the mobile relay in the PRS broadcast message also changes. In this way, the location information of the mobile relay obtained by the terminal device from the PRS broadcast message is always the current location information.

Step 1302: The terminal device performs positioning measurement based on a signal from the cell of the mobile relay, to obtain positioning measurement data.

A positioning procedure for the terminal device is triggered at a moment, and the terminal device may perform positioning measurement based on the signal from the cell of the mobile relay, to obtain the positioning measurement data. For the specific positioning procedure for the terminal device, refer to related descriptions in FIG. 9A and FIG. 9B.

Step 1303: The terminal device sends the location information and the positioning measurement data to an LMF.

The location information and the positioning measurement data are used to determine location information of the terminal device.

After obtaining the location information of the mobile relay from the broadcast message, and performing positioning measurement based on this information from the cell of the mobile relay, the terminal device sends the location information and the positioning measurement data to the LMF.

Optionally, the terminal device sends the location information and the positioning measurement data to the LMF by using an uplink positioning message, where the uplink positioning message may further carry a cell identifier of the cell of the mobile relay. The cell identifier indicates a signal of which cell is used by the terminal device to perform positioning measurement.

Optionally, the method shown in FIG. 13 further includes: The LMF serving the terminal device calculates a location of the terminal device based on the location information of the mobile relay and the positioning measurement data of the terminal device. For a specific calculation process, refer to a known technology. Details are not described herein again.

FIG. 14 is a detailed schematic flowchart of the communication method in the embodiment shown in FIG. 13.

As shown in FIG. 14, the method shown in FIG. 14 includes step 1401 to step 1415. The following describes in detail the steps in the method shown in FIG. 14. It should be understood that, in the method shown in FIG. 14, an example in which the mobile relay is a VMR is used. A UE-AMF is an AMF serving UE, a VMR-AMF is an AMF serving the VMR, and an LMF is an LMF serving a terminal device.

Step 1401: The VMR registers with a core network. For a specific registration procedure, refer to the embodiment shown in FIG. 9A and FIG. 9B. Details are not described herein again.

Step 1402: The VMR obtains cell configuration information.

The VMR obtains cell configuration information from OAM, where the cell configuration information includes a TAC and/or a cell ID of a cell of the VMR.

Step 1403: The VMR sends an MO-LR request message to an access network device.

Specifically, an MT function of the VMR sends the MO-LR request message to the access network device, where the MO-LR request message is for requesting to obtain location information of the VMR from the network.

Step 1404: The VMR-AMF initiates an MO-LR procedure. For a specific process, refer to a known technology.

Step 1405: The VMR-AMF sends an MO-LR response message to the VMR, where the response message carries the location information of the VMR. The MO-LR response message is a message in response to the MO-LR request message in step 1403.

Step 1406: The VMR sends a broadcast message, where the broadcast message carries the location information of the VMR.

Optionally, the broadcast message may further carry a timer. The timer indicates a validity period of the location information of the VMR. Before the timer expires, the location information of the VMR is valid. When the timer expires, the location information of the VMR is invalid.

Step 1407: The UE registers with the core network. For a specific process, refer to descriptions of step 908 in FIG. 9A and FIG. 9B.

Step 1408: The UE-AMF sends a positioning request message to the LMF.

The UE-AMF triggers positioning for the UE at a moment. The UE-AMF selects an LMF network element (UE-LMF) serving the UE, and sends the positioning request message to the LMF, to trigger the LMF to position the UE.

Step 1409: If using a UE assisted positioning procedure, the LMF sends a downlink positioning message (DL positioning message) to the UE-AMF.

Step 1410: The UE-AMF sends the downlink positioning message to the UE.

Correspondingly, the UE receives the downlink positioning message.

Step 1411: The UE performs positioning measurement, and obtains the location information of the VMR from the broadcast message.

For example, after receiving the downlink positioning message, the UE performs positioning measurement based on a positioning reference signal (PRS) sent by a surrounding cell, and obtains the location information of the VMR from the broadcast message.

It should be understood that the UE may further perform measurement by using another PRS from a surrounding cell, for example, a PRS that is sent by a cell served by a base station and that is deployed on each side of a road outside a vehicle, that is, a cell at a fixed location.

It should be further understood that the UE may alternatively perform measurement by using a PRS from another cell of a VMR, that is, the cell that is of the VMR and that is accessed by the UE and the cell used for the positioning measurement may be a same cell or different cells.

For example, if the cell currently accessed by the UE is a cell 1, the cell 1 is a cell of a VMR, cells around the UE further include a cell 2 and a cell 3, the cell 2 is a cell of a VMR, and the cell 3 is a cell of a fixed base station, the UE may perform positioning measurement by using a PRS from any one or more cells of the cell 1, the cell 2, and the cell 3 to.

Step 1412: The UE sends an uplink positioning message to the UE-AMF.

The uplink positioning message carries positioning measurement data of the UE and the location information of the VMR, where the positioning measurement data includes a cell identifier. The UE assisted positioning procedure is used as an example. The cell identifier indicates a PRS of which cell is used by the UE to perform measurement.

Step 1413: The UE-AMF sends the uplink positioning message to the LMF.

Step 1414: The LMF calculates a location of the UE based on the location information of the VMR and the positioning measurement data of the UE.

A method for the LMF to calculate the location of the UE based on the location information of the VMR and the positioning measurement data of the UE is not limited in this application.

Step 1415: The LMF sends the location of the UE to the UE-AMF.

Based on the foregoing technical solution, the terminal device receives the location information from the mobile relay, and performs positioning measurement based on a signal from the cell of the mobile relay, to obtain the positioning measurement data; and sends the location information and the positioning measurement data to the LMF, so that the LMF determines location information of the terminal device based on the location information and the positioning measurement data. This resolves a problem that the LMF serving the terminal device cannot calculate the location of the terminal device because a location of the cell of the mobile relay is not fixed, and helps accurately calculate the location of the terminal device.

The following describes in detail the communication method in Design 4 provided in embodiments of this application. To be specific, after determining that the first cell accessed by the terminal device is the cell of the mobile relay, the access network device reports both the positioning measurement data of the terminal device and the positioning measurement data of the mobile relay to the LMF after the LMF initiates the positioning request, so that the LMF determines the location of the terminal device.

FIG. 15 is a schematic flowchart of a communication method 1500 according to an embodiment of this application. The method 1500 shown in FIG. 15 may include step 1501 to step 1504. The following describes in detail the steps in the method 1500.

Step 1501: An access network device determines that a first cell accessed by a terminal device is a cell of a mobile relay.

The mobile relay is configured to provide a relay service between the terminal device and the access network device. The mobile relay has mobility. In other words, the cell of the mobile relay has mobility.

In a possible implementation, the access network device determines, based on prestored configuration information and information about the first cell, that the first cell is the cell of the mobile relay, where the information about the first cell includes a TAC and/or a cell identifier corresponding to the first cell, the configuration information includes cell information of the mobile relay, the cell information includes a TAC and/or a cell identifier, and the cell information of the mobile relay includes the information about the first cell. In other words, the access network device prestores the cell information of the mobile relay, including the TAC and/or the cell ID. The access network device compares the information about the first cell with the prestored cell information of the mobile relay, and assuming that the information about the first cell is included in the cell information of the mobile relay, determines that the first cell is the cell of the mobile relay. For the configuration information prestored by the access network device, refer to Table 4.

**Table 4**

| Prestored cell configuration information of a mobile relay | |
|---|---|
| TACs | TAC #1, TAC #2, ..., and TAC #10 |
| Cell IDs | Cell ID #1, cell ID #2, ..., and cell ID #10 |

For example, if the TAC of the first cell is the TAC #1, and the cell ID is the cell ID #1, the access network device determines that the first cell is the cell of the mobile relay.

It should be understood that the access network device may prestore the TAC, or the cell ID, or the TAC and the cell ID, corresponding to the cell of the mobile relay. This is not limited in this embodiment of this application.

In another possible implementation, the access network device receives first indication information from the mobile relay or the terminal device, where the first indication information indicates that the first cell is a cell having mobility and/or that the mobile relay has mobility. In an example, the terminal device may indicate, to the access network device, that the cell accessed by the terminal device is a cell having mobility. For example, the terminal device indicates, to the access network device via an RRC message, that the cell accessed by the terminal device is the cell having mobility. In another example, the mobile relay indicates to the access network device that the mobile relay has mobility. For example, an F1 setup request (F1 setup request) message sent by the mobile relay to the access network device carries indication information indicating that the mobile relay has mobility.

In conclusion, in any one of the foregoing manners, the access network device may determine that the first cell accessed by the terminal device is the cell of the mobile relay. The access network device may further determine, by using another method, that the first cell accessed by the terminal device is the cell of the mobile relay. For example, the access network device may alternatively obtain, through OAM configuration, which relay devices are mobile relays in a network. Therefore, a specific implementation in which the access network device determines that the first cell accessed by the terminal device is the cell of the mobile relay is not limited in this application.

Step 1502: The access network device receives a first request message from an LMF, where the first request message is used to trigger positioning measurement for the terminal device.

The LMF is an LMF serving the terminal device.

For example, the access network device receives the first request message from the LMF, where the first request message is used to trigger the positioning measurement for the terminal device. For example, the access network device receives a network positioning message (network positioning message) from the LMF. The access network device triggers, based on the first request message, the mobile relay to initiate the positioning measurement for the terminal device. In addition, the access network device determines that the first cell is the cell of the mobile relay. Therefore, the access network device further triggers positioning measurement on an MT function of the mobile relay, that is, the access network device collects positioning measurement data of the mobile relay.

For example, the access network device sends a request message to the mobile relay, to trigger the mobile relay to perform positioning measurement on the terminal device, that is, the mobile relay collects positioning measurement data of the terminal device. It may be understood that the mobile relay may send the positioning measurement data of the terminal device to the access network device, so that the access network device reports both the positioning measurement data of the mobile relay and the positioning measurement data of the terminal device to the LMF serving the terminal device.

Step 1503: The access network device obtains the positioning measurement data of the mobile relay.

After the access network device receives the first request message, because the access network device determines that the first cell is the cell of the mobile relay, the access network device further triggers positioning measurement on the MT function of the mobile relay, that is, the access network device collects the positioning measurement data of the mobile relay.

Step 1504: The access network device sends a first response message to the LMF, where the first response message includes the positioning measurement data of the mobile relay and the positioning measurement data of the terminal device.

After obtaining the positioning measurement data of the terminal device and the positioning measurement data of the mobile relay, the access network device sends the positioning measurement data of the terminal device and the positioning measurement data of the mobile relay to the LMF. For example, the access network device sends the positioning measurement data of the terminal device and the positioning measurement data of the mobile relay to the LMF based on the network positioning message (network positioning message) and via an AMF serving the terminal device.

Optionally, the method shown in FIG. 15 further includes: A UE-LMF determines location information of the terminal device based on the positioning measurement data of the terminal device and the positioning measurement data of the mobile relay.

Because the positioning measurement data of the mobile relay is collected by a cell of the access network device, and location information of the cell of the access network device is known to the UE-LMF, the UE-LMF may determine location information of the mobile relay based on the positioning measurement data of the mobile relay. Further, the positioning measurement data of the UE is collected by the cell of the mobile relay, and the UE-LMF calculates the location information of the UE based on the location information of the mobile relay and the positioning measurement data of the UE.

FIG. 16 is a detailed schematic flowchart of the communication method in the embodiment shown in FIG. 15.

As shown in FIG. 16, the method shown in FIG. 16 includes step 1601 to step 1615. The following describes in detail the steps in the method shown in FIG. 16. It should be understood that, in the method shown in FIG. 16, an example in which the mobile relay is a VMR is used. A UE-AMF is an AMF serving UE, a VMR-AMF is an AMF serving the VMR, a UE-LMF is an LMF serving a terminal device, and a VMR-LMF is an LMF serving the VMR.

Step 1601: The VMR registers with a core network. For a specific registration procedure, refer to the embodiment shown in FIG. 9A and FIG. 9B. Details are not described herein again.

Step 1602: The VMR obtains cell configuration information.

The VMR obtains cell configuration information from OAM, where the cell configuration information includes a TAC and/or a cell ID of a cell of the VMR.

Step 1603: The VMR sends a broadcast message.

Optionally, the broadcast message may carry indication information, where the indication information indicates that the cell is the cell of the VMR, namely, a mobile cell.

Step 1604: The UE registers with the core network.

The UE accesses the cell of the VMR and initiates the registration procedure. For a specific process, refer to a known technology. It may be understood that the cell currently accessed by the UE is the cell of the VMR (where the cell of the VMR accessed by the UE and a cell of the access network device accessed by the VMR are different cells). Because the VMR has the mobility, the cell of the VMR is also in a moving state.

Step 1605: The UE-AMF sends a positioning request message to the UE-LMF.

The UE-AMF triggers positioning for the UE at a moment. The UE-AMF selects an LMF network element serving the UE (the UE-LMF), and sends the positioning request message to the UE-LMF, to trigger the UE-LMF to position the UE.

Step 1606: If using a network assisted positioning procedure, the UE-LMF sends a network positioning message (network positioning message) to the UE-AMF.

Step 1607: The UE-AMF sends the network positioning message to the access network device.

Step 1608: The access network device determines that the cell accessed by the UE is the cell of the VMR. For a specific procedure, refer to related descriptions of step 1501 in FIG. 15. Details are not described herein again.

Step 1609: The access network device performs positioning measurement on the VMR. That is, the access network device collects positioning measurement data of the VMR.

That the access network device performs positioning measurement on the VMR may be understood as that the access network device performs positioning measurement on a VMR-MT (or IAB-UE).

Step 1610: The VMR performs positioning measurement on the UE.

The access network device sends a request message to the VMR, to trigger the VMR to perform positioning measurement on the terminal device. It may be understood that the VMR collects positioning measurement data of the UE. For example, the VMR performs positioning measurement by using a signal sent by the UE, to obtain the positioning measurement data. A parameter used by the VMR to perform positioning measurement by using the signal sent by the UE is not limited in this application. For example, the VMR may measure an uplink angle of arrival on a beam in which the UE is located.

It needs to be noted that step 1609 and step 1610 may be performed simultaneously, or may be performed separately. When the two steps are performed separately, an execution sequence of the two steps is not limited in this application. That is, a sequence in which the access network device performs positioning measurement on the VMR and the VMR performs positioning measurement on the UE is not limited in this embodiment of this application.

Step 1611: The VMR sends the positioning measurement data of the UE to the access network device.

For example, a method for the VMR to send the positioning measurement data of the UE to the access network device may include: The VMR sends the positioning measurement data to the access network device via an F1 interface.

Step 1612: The access network device sends a network positioning message to the UE-AMF.

The network positioning message carries the positioning measurement data of the UE and the positioning measurement data of the VMR, where the positioning measurement data of the UE includes a cell identifier, and the cell identifier indicates a cell with which the positioning measurement data of the UE is associated. Similarly, the positioning measurement data of the VMR includes a cell identifier, where the cell identifier indicates a cell with which the positioning measurement data of the VMR is associated. For example, if the VMR-MT performs measurement by using a PRS of the cell of the access network device, the cell identifier in the positioning measurement data includes a cell identifier (a cell ID of an NG-RAN) of the access network device. Table 5 shows an example of content of the positioning measurement data reported by the access network device. As shown in Table 5, the positioning measurement data reported by the access network device includes measurement data obtained by positioning the UE by the VMR, for example, a cell ID of the VMR and a report obtained by performing positioning measurement on the UE by using the cell. The positioning measurement data reported by the access network device further includes measurement data obtained by positioning the VMR-MT by the access network device, for example, the cell ID of the NG-RAN, and a report obtained by performing positioning measurement on the VMR-MT by using the cell.

**Table 5**

| Positioning measurement | Content of positioning measurement data |
|---|---|
| Measurement data obtained by positioning UE by a VMR | Cell ID of the VMR, and report obtained by performing positioning measurement on the UE by using this cell |
| Measurement data obtained by positioning a VMR-MT by an NG-RAN | Cell ID of the NG-RAN, and report obtained by performing positioning measurement on the VMR-MT by using this cell |

Optionally, to distinguish the positioning measurement data of the UE from the positioning measurement data of the VMR, the network positioning message may further carry indication information, to indicate which measurement data is the positioning measurement data of the UE and which measurement data is the positioning measurement data of the VMR.

Step 1613: The UE-AMF sends the network positioning message to the UE-LMF.

The network positioning message includes the positioning measurement data of the VMR and the positioning measurement data of the UE.

Optionally, the network positioning message may further include the indication information in step 1612.

Step 1614: The UE-LMF calculates a location of the UE.

The UE-LMF calculates location information of the UE based on the positioning measurement data of the VMR and the positioning measurement data of the UE.

Because the positioning measurement data of the VMR is collected by the cell of the access network device, and location information of the cell of the access network device is known to the UE-LMF, the UE-LMF may determine a location of the VMR based on the positioning measurement data of the VMR. Further, the positioning measurement data of the UE is collected by the cell of the VMR, and the UE-LMF calculates the location information of the UE based on the location of the VMR and the positioning measurement data of the UE.

In an implementation, after receiving the positioning measurement data of the VMR and the positioning measurement data of the UE, if the UE-LMF fails to determine the location information of the cell corresponding to the cell identifier included in the positioning measurement data of the UE, the UE-LMF determines the location of the VMR based on the positioning measurement data of the VMR, and then calculates the location information of the UE based on the location of the VMR and the positioning measurement data of the UE. It may be understood that the positioning measurement data of the VMR is associated with the cell identifier included in the positioning measurement data of the UE, and the positioning measurement data of the VMR is used to determine the location information of the cell corresponding to the cell identifier included in the positioning measurement data of the UE.

In another implementation, the UE-LMF obtains, based on the indication information included in the network positioning message, which measurement data is the VMR positioning measurement data, and determines the location of the VMR based on the positioning measurement data, and the UE-LMF then calculates the location information of the UE based on the location of the VMR and the positioning measurement data of the UE.

A specific method for the UE-LMF to calculate the location of the UE based on the positioning measurement data of the VMR and the positioning measurement data of the UE is not limited in this embodiment.

Step 1615: The UE-LMF sends the location of the UE to the UE-AMF.

Based on the foregoing technical solution, after determining that the first cell accessed by the terminal device is the cell of the mobile relay, the access network device further triggers positioning measurement on the mobile relay after the LMF initiates a positioning request, to obtain the positioning measurement data of the mobile relay and report both the positioning measurement data of the terminal device and the positioning measurement data of the mobile relay to the LMF, so that the LMF determines the location of the terminal device. This resolves a problem that the LMF serving the terminal device cannot calculate the location of the terminal device because a location of the cell of the mobile relay is not fixed, and helps accurately calculate the location of the terminal device.

The following describes in detail, with reference to FIG. 17, another communication method provided in this application. To be specific, the terminal device screens cells used for positioning measurement, and performs measurement by using only a signal of a non-mobile cell, to obtain positioning measurement data, so that a core network device determines the location information of the terminal device based on the positioning measurement data.

FIG. 17 is a schematic flowchart of a communication method 1700 according to an embodiment of this application. The method 1700 shown in FIG. 17 may include step 1701 and step 1702. The following describes in detail the steps in the method 1700.

Step 1701: A terminal device receives a broadcast message from a cell, where the broadcast message includes first indication information, and the first indication information indicates a type of the cell.

The type of the cell includes a cell of a mobile relay or a cell of a non-mobile relay (namely, a mobile cell or a non-mobile cell), and the mobile relay has mobility.

It may be understood that the broadcast message further carries a TAC and/or a cell identifier supported by the cell.

For example, the terminal device receives a broadcast message from a cell 1, where the broadcast message includes indication information 1, and the indication information 1 indicates that the cell 1 is the cell of the mobile relay. Similarly, the terminal device receives a broadcast message from a cell 2, where the broadcast message includes indication information 2, and the indication information 2 indicates that the cell 2 is the cell of the non-mobile relay. In other words, the terminal device may determine which surrounding cells are cells of mobile relays and which surrounding cells are cells of non-mobile relays.

Step 1702: The terminal device performs positioning measurement based on a signal of a cell whose type is a cell of a non-mobile relay, where the positioning measurement excludes a cell whose type is a cell of a mobile relay.

The terminal device selects the signal of the cell of the non-mobile relay to perform positioning measurement.

For example, if determining that the cell 1 is the cell of the mobile relay and the cell 2 is the cell of the non-mobile relay, the terminal device selects a signal of the cell 2 to perform positioning measurement. For a specific procedure in which the terminal device performs positioning measurement based on the signal of the cell 2, refer to a known technology. Details are not described herein again.

FIG. 18 is a detailed schematic flowchart of the communication method in the embodiment shown in FIG. 17.

As shown in FIG. 18, the method shown in FIG. 18 includes step 1801 to step 1813. The following describes in detail the steps in the method shown in FIG. 18. It should be understood that, in the method shown in FIG. 18, an example in which the mobile relay is a VMR is used. A UE-AMF is an AMF serving UE, a VMR-AMF is an AMF serving the VMR, and a UE-LMF is an LMF serving a terminal device.

It should be further understood that in this embodiment of this application, the AMF serving the UE and the AMF serving the VMR may be a same AMF or different AMFs. This is not limited in this embodiment of this application.

Step 1801: The VMR registers with a core network. For a specific registration procedure, refer to the embodiment shown in FIG. 9A and FIG. 9B. Details are not described herein again.

Step 1802: The VMR obtains cell configuration information.

The VMR obtains cell configuration information from OAM, where the cell configuration information includes a TAC and/or a cell ID of a cell of the VMR.

Step 1803: The VMR sends a broadcast message.

Optionally, the broadcast message may carry first indication information, where the first indication information indicates that the cell is the cell of the VMR, namely, a mobile cell.

Step 1804: The UE registers with the core network.

The UE accesses the cell of the VMR and initiates the registration procedure. For a specific process, refer to a known technology. It may be understood that the cell currently accessed by the UE is the cell of the VMR (where the cell of the VMR accessed by the UE and a cell of the access network device accessed by the VMR are different cells). Because the VMR has the mobility, the cell of the VMR is also in a moving state.

Step 1805: The UE-AMF triggers location reporting. The UE-AMF triggers positioning for the UE at a moment.

Step 1806: The UE-AMF sends a positioning request message to the UE-LMF.

The UE-AMF selects an LMF network element serving the UE (the UE-LMF), and sends the positioning request message to the UE-LMF, to trigger the UE-LMF to position the UE.

Step 1807: If using a UE assisted positioning procedure, the UE-LMF sends a downlink positioning message to the UE-AMF.

Step 1808: The UE-AMF sends the downlink positioning message to the UE.

Step 1809: The UE determines a cell used for positioning measurement.

The UE determines, based on the first indication information carried in the broadcast message of the cell, which cells can be used for the positioning measurement. For example, the terminal device receives a broadcast message from a cell 1, where the broadcast message includes indication information 1, and the indication information 1 indicates that the cell 1 is the cell of the mobile relay. Similarly, the terminal device receives a broadcast message from a cell 2, where the broadcast message includes indication information 2, and the indication information 2 indicates that the cell 2 is the cell of the non-mobile relay. In this case, the terminal device performs positioning measurement by using the signal of the cell 2.

Step 1810: The UE sends an uplink positioning message to the UE-AMF.

The uplink positioning message carries positioning measurement data of the terminal device, and the positioning measurement data includes a cell identifier of the cell 2. The positioning measurement data is used by the UE-LMF to determine location information of the terminal device.

Step 1811: The UE-AMF sends the uplink positioning message to the UE-LMF.

Step 1812: The UE-LMF determines a location of the UE based on the positioning measurement data.

The UE-LMF calculates the location information of the UE based on prestored location information of a fixed cell and the positioning measurement data of the terminal device.

Step 1813: The UE-LMF sends the location of the UE to the UE-AMF.

Based on the foregoing technical solution, the terminal device screens the cells used for the positioning measurement, and performs measurement by using only the signal of the non-mobile cell, to obtain positioning measurement data, so that the LMF determines the location information of the terminal device based on the positioning measurement data. Only the signal of the cell of the non-mobile relay is selected for the positioning measurement, thereby resolving a problem that the LMF fails to determine a location of the terminal device because a location of the cell used for the positioning measurement changes, and helping the LMF accurately calculate the location of the terminal device.

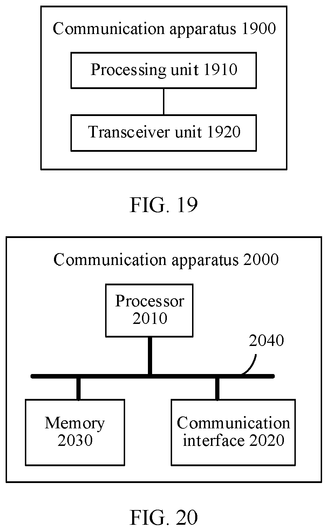

FIG. 19 to FIG. 22 each are a diagram of a structure of a possible communication apparatus according to an embodiment of this application.

FIG. 19 is a block diagram of a communication apparatus 1900 according to an embodiment of this application.

As shown in FIG. 19, the communication apparatus 1900 includes a processing unit 1910 and a transceiver unit 1920.

The apparatus 1900 may be configured to implement a function of the terminal device in the foregoing method embodiment, or the apparatus 1900 may include a module configured to implement any function or operation of the terminal device in the foregoing method embodiment. The module may be all or partially implemented by using software, hardware, firmware, or any combination thereof. The apparatus 1900 may be configured to implement a function of the access network device in the foregoing method embodiment, or the apparatus 1900 may include a module configured to implement any function or operation of the access network device in the foregoing method embodiment. The module may be all or partially implemented by using software, hardware, firmware, or any combination thereof. The apparatus 1900 may be configured to implement a function of the LMF in the foregoing method embodiment, or the apparatus 1900 may include a module configured to implement any function or operation of the LMF in the foregoing method embodiment. The module may be all or partially implemented by using software, hardware, firmware, or any combination thereof. The apparatus 1900 may be configured to implement a function of the AMF in the foregoing method embodiment, or the apparatus 1900 may include a module configured to implement any function or operation of the AMF in the foregoing method embodiment. The module may be all or partially implemented by using software, hardware, firmware, or any combination thereof.

For example, when the apparatus 1900 is configured to implement the function of the LMF in the method embodiment shown in FIG. 8, the transceiver unit 1920 is configured to receive measurement data of a first positioning procedure, where the measurement data of the first positioning procedure includes information about a first cell, the first cell is a cell of a mobile relay, and the mobile relay has mobility; the processing unit 1910 is configured to obtain first information, where the first information is associated with the mobile relay; the transceiver unit 1920 is further configured to send a first request message based on the first information, where the first request message is used to trigger a second positioning procedure for the mobile relay; the transceiver unit 1920 is further configured to receive location information of the mobile relay, where the location information of the mobile relay is determined based on the second positioning procedure; and the processing unit 1910 is further configured to determine a location of the terminal device based on the location information of the mobile relay and the measurement data of the first positioning procedure.

Optionally, the information about the first cell includes a cell identifier of the first cell; and the processing unit 1910 is further configured to determine, based on the cell identifier of the first cell, that the first cell is the cell of the mobile relay.

Optionally, the information about the first cell further includes first indication information, where the first indication information indicates that the first cell is the cell of the mobile relay.

Optionally, the information about the first cell further includes first indication information; and the processing unit 1910 is further configured to determine, based on the first indication information, to trigger a second positioning procedure for the mobile relay.

Optionally, the processing unit 1910 is specifically configured to: send a second request message to a first network element, where the second request message includes the cell identifier of the first cell; and receive a second response message from the first network element, where the second response message includes the first information.

Optionally, the first network element is any one of the following: an access network device, a UDM, a UDR, or an NRF.

Optionally, the first information includes at least one of an identifier of an AMF and an identifier of the mobile relay, and the AMF is an AMF serving the mobile relay.

For example, when the apparatus 1900 is configured to implement the function of the LMF in the method embodiment shown in FIG. 11, the transceiver unit 1920 is configured to receive a first request message, where the first request message is used to trigger a first positioning procedure for a terminal device, the first positioning request message includes first information, the first information includes at least one of an identifier of an AMF and an identifier of a mobile relay, the AMF is an AMF serving the mobile relay, the mobile relay is configured to provide a relay service between the terminal device and an access network device, and the mobile relay has mobility; and the transceiver unit 1920 is configured to send a second request message based on the first information, where the second request message is used to trigger a second positioning procedure for the mobile relay.

For example, when the apparatus 1900 is configured to implement the function of the AMF in the method embodiment shown in FIG. 11, the processing unit 1910 is configured to determine that a first cell accessed by a terminal device is a cell of a mobile relay, where the mobile relay is configured to provide a relay service between the terminal device and an access network device, and the mobile relay has mobility; the processing unit 1910 is further configured to obtain first information, where the first information includes at least one of an identifier of the AMF serving the mobile relay and an identifier of the mobile relay; and the transceiver unit 1920 is configured to send a first request message to an LMF, where the first request message is used to trigger a first positioning procedure for the terminal device, the first request message includes the first information, and the first information is used to trigger a second positioning procedure for the mobile relay.

Optionally, the processing unit 1910 is specifically configured to receive a first message from the access network device, where the first message includes an identifier of the first cell accessed by the terminal device and indication information, and the indication information indicates that the first cell is the cell of the mobile relay.

Optionally, the processing unit 1910 is specifically configured to: send a second request message to a first network element, where the second request message includes the cell identifier of the first cell; and receive a second response message from the first network element, where the second response message includes the first information.

Optionally, the first network element is any one of the following: an access network device, a UDM, a UDR, or an NRF.

For example, when the apparatus 1900 is configured to implement the function of the terminal device in the method embodiment shown in FIG. 13, the transceiver unit 1920 is configured to: receive location information from a mobile relay, where the location information indicates a location of the mobile relay, and the mobile relay has mobility; perform positioning measurement based on a signal from a cell of the mobile relay, to obtain positioning measurement data; and send the location information and the positioning measurement data to an LMF, where the location information and the positioning measurement data are used to determine location information of the terminal device.

Optionally, the transceiver unit 1920 is specifically configured to send the location information and the positioning measurement data to the LMF by using an uplink positioning message, where the uplink positioning message further carries a cell identifier of the cell of the mobile relay.

Optionally, the transceiver unit 1920 is specifically configured to receive the location information from the mobile relay from a broadcast message, where the broadcast message carries the location information of the mobile relay.

For example, when the apparatus 1900 is configured to implement the function of the access network device in the method embodiment shown in FIG. 15, the processing unit 1910 is configured to determine that a first cell accessed by a terminal device is a cell of a mobile relay, where the mobile relay is configured to provide a relay service between the terminal device and the access network device, and the mobile relay has mobility; the processing unit 1910 is further configured to obtain positioning measurement data of the mobile relay, where the positioning measurement data of the mobile relay is used to determine a location of the first cell; the transceiver unit 1920 is configured to receive a first request message from an LMF, where the first request message is used to trigger positioning measurement for the terminal device; and the transceiver unit 1920 is further configured to send a first response message to the LMF, where the first response message includes the positioning measurement data of the mobile relay and positioning measurement data of the terminal device, and the positioning measurement data of the terminal device includes information about the first cell.

Optionally, the processing unit 1910 is specifically configured to determine, based on prestored configuration information and the information about the first cell, that the first cell is the cell of the mobile relay, where the information about the first cell includes a TAC and/or a cell identifier corresponding to the first cell, the configuration information includes cell information of the mobile relay, the cell information includes a TAC and/or a cell identifier, and the cell information of the mobile relay includes the information about the first cell.

Optionally, the processing unit 1910 is specifically configured to receive first indication information from the mobile relay or the terminal device, where the first indication information indicates that the first cell is a cell having mobility and/or that the mobile relay has mobility.

For example, when the apparatus 1900 is configured to implement the function of the terminal device in the method embodiment shown in FIG. 17, the transceiver unit 1920 is configured to receive a broadcast message from a cell, where the broadcast message includes first indication information, the first indication information indicates a type of the cell, the type of the cell includes a cell of a mobile relay or a cell of a non-mobile relay, and the mobile relay has mobility; and the processing unit 1910 is configured to perform positioning measurement based on a signal of a cell whose type is a cell of a non-mobile relay, where the positioning measurement excludes a cell whose type is a cell of a mobile relay.

For more detailed descriptions about the processing unit 1910 and the transceiver unit 1920, directly refer to related descriptions in the foregoing method embodiments. Details are not described herein again.

It should be understood that the unit division in embodiments of this application is an example, and is merely logical function division. There may be another division manner in actual implementation. In addition, functional units in embodiments of this application may be integrated into one processor, or each of the units may exist alone physically, or two or more units are integrated into one unit. The integrated unit may be implemented in a form of hardware, or may be implemented in a form of a software functional unit.

FIG. 20 is another block diagram of a communication apparatus 2000 according to an embodiment of this application. The apparatus 2000 may be a chip system, or may be an apparatus that is configured with a chip system and that is configured to implement a communication function in the foregoing method embodiment. In this embodiment of this application, the chip system may include a chip, or may include a chip and another discrete device.

As shown in FIG. 20, the apparatus 2000 may include a processor 2010 and a communication interface 2020. The communication interface 2020 may be configured to communicate with another device via a transmission medium, so that the apparatus 2000 may communicate with the another device. The communication interface 2020 may be, for example, a transceiver, an interface, a bus, a circuit, or an apparatus that can implement a transceiver function. The processor 2010 may input and output data via the communication interface 2020, and is configured to implement the method according to any one of the embodiments corresponding to FIG. 8 to FIG. 18. Specifically, the apparatus 2000 may be configured to implement a function of the access network device, the terminal device, the LMF, or the AMF in the foregoing method embodiment.

When the apparatus 2000 is configured to implement the method according to any one of the embodiments corresponding to FIG. 8 to FIG. 18, the processor 2010 is configured to implement a function of the processing unit 1910, and the communication interface 2020 is configured to implement a function of the transceiver unit 1920.

Optionally, the apparatus 2000 further includes at least one memory 2030, configured to store program instructions and/or data. The memory 2030 is coupled to the processor 2010. The coupling in this embodiment of this application may be an indirect coupling or a communication connection between apparatuses, units, or modules in an electrical form, a mechanical form, or another form, and is used for information exchange between the apparatuses, the units, or the modules. The processor 2010 may cooperate with the memory 2030. The processor 2010 may execute the program instructions stored in the memory 2030. At least one of the at least one memory may be included in the processor.

A specific connection medium among the processor 2010, the communication interface 2020, and the memory 2030 is not limited in this embodiment of this application. In this embodiment of this application, in FIG. 20, the processor 2010, the communication interface 2020, and the memory 2030 are connected via a bus 2040. The bus 2040 is represented by a bold line in FIG. 20, and a manner of connection between other components is merely described as an example, and constitutes no limitation. The bus may be classified into an address bus, a data bus, a control bus, and the like. For ease of representation, only one bold line is used to represent the bus in FIG. 20, but this does not mean that there is only one bus or only one type of bus.

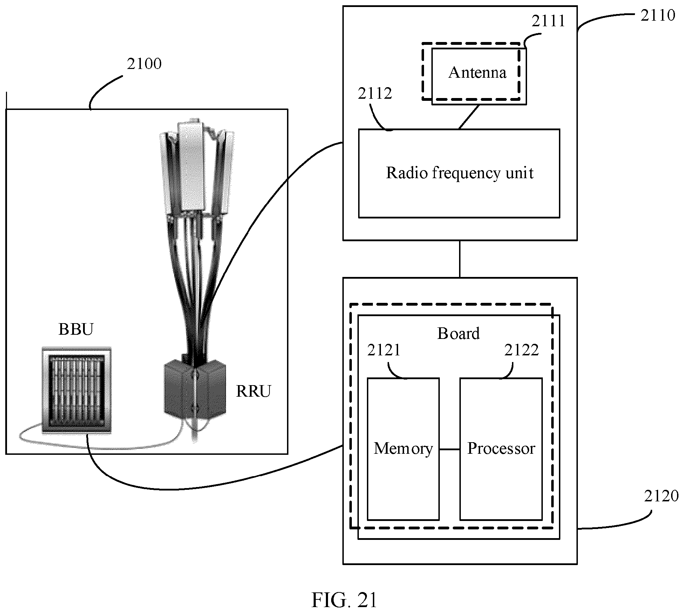

FIG. 21 is a diagram of a structure of an access network device according to an embodiment of this application, for example, may be a diagram of a structure of a base station. The base station 2100 may perform a function of the access network device in the foregoing method embodiment. As shown in FIG. 21, the base station 2100 may include one or more radio frequency units, such as a remote radio unit (remote radio unit, RRU) 2110 and one or more baseband units (BBU) (which may also be referred to as a distributed unit (DU)) 2120. The RRU 2110 may be referred to as a transceiver unit, and corresponds to the transceiver unit 1920 in FIG. 19. Optionally, the RRU 2110 may also be referred to as a transceiver machine, a transceiver circuit, a transceiver, or the like, and may include at least one antenna 2111 and a radio frequency unit 2112. Optionally, the RRU 2110 may include a receiving unit and a sending unit. The receiving unit may correspond to a receiver (or referred to as a receiver machine or a receiver circuit), and the sending unit may correspond to a transmitter (or referred to as a transmitter machine or a transmitter circuit). The RRU 2110 is mainly configured to: receive and send a radio frequency signal, and perform conversion between the radio frequency signal and a baseband signal. For example, the RRU is configured to send configuration information to a terminal device. The BBU 2120 is mainly configured to: perform baseband processing, control the base station, and the like. The RRU 2110 and the BBU 2120 may be physically disposed together, or may be physically disposed separately, that is, in a distributed base station.

The BBU 2120 is a control center of the base station, may also be referred to as a processing unit, and may correspond to the processing unit 1910 in FIG. 19. The BBU is mainly configured to implement a baseband processing function, for example, channel coding, multiplexing, modulation, and spreading. For example, the BBU (the processing unit) may be configured to control the base station to perform operation procedures related to the access network device in the foregoing method embodiments.

In an example, the BBU 2120 may include one or more boards, and the plurality of boards may jointly support a radio access network (such as an LTE network) of a single access standard, or may separately support radio access networks (such as the LTE network, a 5G network, or another network) of different access standards. The BBU 2120 further includes a memory 2121 and a processor 2122. The memory 2121 is configured to store necessary instructions and data. The processor 2122 is configured to control the base station to perform a necessary action, for example, configured to control the base station to perform an operation procedure related to the access network device in the foregoing method embodiment. The memory 2121 and the processor 2122 may serve the one or more boards. In other words, a memory and a processor may be separately disposed on each board. Alternatively, the plurality of boards may share a same memory and processor. In addition, a necessary circuit may further be disposed on each board.

It should be understood that the base station 2100 shown in FIG. 21 can implement processes related to the access network device in the foregoing method embodiments. Operations and/or functions of modules in the base station 2100 are separately for implementing corresponding procedures in the foregoing method embodiments. For details, refer to descriptions in the foregoing method embodiment. To avoid repetition, detailed descriptions are properly omitted herein.

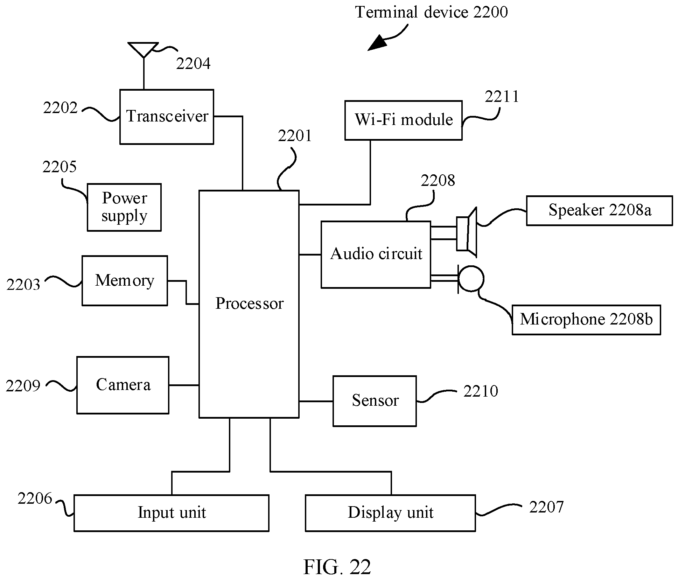

FIG. 22 is a diagram of a structure of a terminal device according to an embodiment of this application. The terminal device 2200 has a function of the terminal device in the method embodiment. As shown in FIG. 22, the terminal device 2200 includes a processor 2201 and a transceiver 2202. Optionally, the terminal device 2200 further includes a memory 2203. The processor 2201, the transceiver 2202, and the memory 2203 may communicate with each other through an internal connection path, to transmit a control signal and/or a data signal. The memory 2203 is configured to store a computer program. The processor 2201 is configured to: invoke the computer program from the memory 2203 and run the computer program, to control the transceiver 2202 to send and receive a signal. Optionally, the terminal device 2200 may further include an antenna 2204, configured to send, by using a radio signal, uplink data or uplink control signaling output by the transceiver 2202. Optionally, the terminal device 2200 further includes a Wi-Fi module 2211, configured to access a wireless network.

The processor 2201 and the memory 2203 may be combined into one processing apparatus, and the processor 2201 is configured to execute program code stored in the memory 2203 to implement the foregoing function. During specific implementation, the memory 2203 may alternatively be integrated into the processor 2201, or may be independent of the processor 2201. The processor 2201 may correspond to the processing unit 1910 in FIG. 19 or the processor 2010 in FIG. 20.

The transceiver 2202 may correspond to the transceiver unit 1920 in FIG. 19 or the communication interface 2020 in FIG. 20. The transceiver 2202 may include a receiver (or referred to as a receiver machine or a receiver circuit) and a transmitter (or referred to as a transmitter machine or a transmitter circuit). The receiver is configured to receive a signal, and the transmitter is configured to transmit a signal.

Optionally, the terminal device 2200 may further include a power supply 2205, configured to supply power to various devices or circuits of the terminal device 2200.

In addition, to improve a function of the terminal device, the terminal device 2200 may further include one or more of an input unit 2206, a display unit 2207, an audio circuit 2208, a camera 2209, a sensor 2210, and the like. The audio circuit may further include a speaker 2208a, a microphone 2208b, and the like.

It should be understood that the terminal device 2200 shown in FIG. 22 can implement processes related to the terminal device in the method embodiments. Operations and/or functions of modules in the terminal device 2200 are separately for implementing corresponding procedures in the foregoing method embodiments. For details, refer to descriptions in the foregoing method embodiment. To avoid repetition, detailed descriptions are properly omitted herein.

This application further provides a computer program product. The computer program product includes a computer program (which may also be referred to as code or instructions). When the computer program is run, a computer is enabled to perform the method according to any one of the embodiments corresponding to FIG. 8 to FIG. 18.

This application further provides a computer-readable storage medium. The computer-readable storage medium stores a computer program (which may also be referred to as code or instructions). When the computer program is run, a computer is enabled to perform the method according to any one of the embodiments corresponding to FIG. 8 to FIG. 18.

It should be noted that the processor in embodiments of this application may be an integrated circuit chip, and has a signal processing capability. During implementation, steps in the foregoing method embodiments can be implemented by using a hardware integrated logical circuit in the processor or instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware device. The processor may implement or perform the methods, the steps, and logical block diagrams that are disclosed in embodiments of this application. The general-purpose processor may be a microprocessor, or the processor may be any conventional processor, or the like. The steps of the methods disclosed with reference to embodiments of this application may be directly performed and completed by a hardware decoding processor, or may be performed and completed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It should be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the systems and methods described in this specification includes but is not limited to these memories and any memory of another proper type.

Terms such as "unit" and "module" used in this specification may indicate computer-related entities, hardware, firmware, combinations of hardware and software, software, or software being executed. The unit and the module in embodiments of this application have same meanings, and may be used crossly.

A person of ordinary skill in the art may be aware that, in combination with illustrative logical blocks (illustrative logical blocks) described in embodiments disclosed in this specification and steps (steps) may be implemented by using electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. In several embodiments provided in this application, it should be understood that the disclosed apparatus, device, and method may be implemented in other manners. For example, the described apparatus embodiment is merely examples. For example, unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented via some interfaces. The indirect couplings or communication connections between the apparatuses or units may be implemented in an electrical form, a mechanical form, or another form.

The units described as separate components may or may not be physically separate, and components displayed as units may or may not be physical units, in other words, may be located in one position, or may be distributed on a plurality of network units. Some or all of the units may be selected based on an actual requirement to achieve the objectives of the solutions of the embodiments.

In addition, functional units in embodiments of this application may be integrated into one processing unit, each of the units may exist alone physically, or two or more units may be integrated into one unit.

In the foregoing embodiments, all or some functions of the functional units may be implemented by using software, hardware, firmware, or any combination thereof. When software is used to implement the embodiments, all or some of the embodiments may be implemented in a form of a computer program product. The computer program product includes one or more computer instructions (programs). When the computer program instructions (programs) are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), or a semiconductor medium (for example, a solid-state drive (solid-state drive, SSD)).

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a location management function LMF, wherein the LMF serves a terminal device, and the method comprises:
receiving measurement data of a first positioning procedure, wherein the measurement data of the first positioning procedure comprises information about a first cell, the first cell is a cell of a mobile relay, and the mobile relay has mobility;
obtaining first information, wherein the first information is associated with the mobile relay;
sending a first request message based on the first information, wherein the first request message is used to trigger a second positioning procedure for the mobile relay;
receiving location information of the mobile relay, wherein the location information of the mobile relay is determined based on the second positioning procedure; and
determining a location of the terminal device based on the location information of the mobile relay and the measurement data of the first positioning procedure.

2. The method according to claim 1, wherein the information about the first cell comprises a cell identifier of the first cell; and the method further comprises:
determining, based on the cell identifier of the first cell, that the first cell is the cell of the mobile relay.

3. The method according to claim 2, wherein the information about the first cell further comprises first indication information, wherein the first indication information indicates that the first cell is the cell of the mobile relay.

4. The method according to claim 2, wherein the information about the first cell further comprises first indication information; and the method further comprises:
determining, based on the first indication information, to trigger the second positioning procedure for the mobile relay.

5. The method according to any one of claims 1 to 4, wherein the obtaining first information comprises:
sending a second request message to a first network element, wherein the second request message comprises a cell identifier of the first cell; and
receiving a second response message from the first network element, wherein the second response message comprises the first information.

6. The method according to claim 5, wherein the first network element is any one of the following: an access network device, a unified data management UDM, a unified data repository UDR, or a network repository function NRF.

7. The method according to any one of claims 1 to 6, wherein the first information comprises at least one of an identifier of an access and mobility management function AMF or an identifier of the mobile relay, and the AMF is an AMF serving the mobile relay.

8. The method according to any one of claims 1 to 4, wherein the first information is obtained from an AMF serving the terminal device.

9. A communication method, applied to an access and mobility management function AMF, wherein the AMF serves a terminal device, and the method comprises:
determining that a first cell accessed by the terminal device is a cell of a mobile relay, wherein the mobile relay is configured to provide a relay service between the terminal device and an access network device, and the mobile relay has mobility;
obtaining first information, wherein the first information comprises at least one of an identifier of an AMF serving the mobile relay or an identifier of the mobile relay; and
sending a first request message to a location management function LMF, wherein the first request message is used to trigger a first positioning procedure for the terminal device, the first request message comprises the first information, and the first information is used to trigger a second positioning procedure for the mobile relay.

10. The method according to claim 9, wherein the determining that a first cell accessed by the terminal device is a cell of a mobile relay comprises:
receiving a first message from the access network device, wherein the first message comprises an identifier of the first cell accessed by the terminal device and indication information, and the indication information indicates that the first cell is the cell of the mobile relay.

11. The method according to claim 9 or 10, wherein the obtaining first information comprises:
sending a second request message to a first network element, wherein the second request message comprises a cell identifier of the first cell; and
receiving a second response message from the first network element, wherein the second response message comprises the first information.

12. The method according to claim 11, wherein the first network element is any one of the following: an access network device, a unified data management UDM, a unified data repository UDR, or a network repository function NRF.

13. A communication method, applied to a terminal device, wherein the method comprises:
receiving location information from a mobile relay, wherein the location information indicates a location of the mobile relay, and the mobile relay has mobility;
performing positioning measurement based on a signal from a cell of the mobile relay, to obtain positioning measurement data; and
sending the location information and the positioning measurement data to a location management function LMF, wherein the location information and the positioning measurement data are used to determine a location of the terminal device.

14. The method according to claim 13, wherein the sending the location information and the positioning measurement data to a LMF comprises:
sending the location information and the positioning measurement data to the LMF by using an uplink positioning message, wherein the uplink positioning message further carries a cell identifier of the cell of the mobile relay.

15. The method according to claim 13 or 14, wherein the receiving location information from a mobile relay comprises:
receiving the location information from the mobile relay from a broadcast message, wherein the broadcast message carries the location information of the mobile relay.

16. A communication method, applied to an access network device, wherein the method comprises:
determining that a first cell accessed by a terminal device is a cell of a mobile relay, wherein the mobile relay is configured to provide a relay service between the terminal device and the access network device, and the mobile relay has mobility;
receiving a first request message from a location management function LMF, wherein the first request message is used to trigger positioning measurement for the terminal device;
obtaining positioning measurement data of the mobile relay, wherein the positioning measurement data of the mobile relay is used to determine a location of the first cell; and
sending a first response message to the LMF, wherein the first response message comprises the positioning measurement data of the mobile relay and positioning measurement data of the terminal device, and the positioning measurement data of the terminal device comprises information about the first cell.

17. The method according to claim 16, wherein the determining that a first cell accessed by a terminal device is a cell of a mobile relay comprises:
determining, based on prestored configuration information and the information about the first cell, that the first cell is the cell of the mobile relay, wherein the information about the first cell comprises a tracking area code TAC and/or a cell identifier corresponding to the first cell, the configuration information comprises cell information of the mobile relay, the cell information comprises a TAC and/or a cell identifier, and the cell information of the mobile relay comprises the information about the first cell.

18. The method according to claim 16, wherein the determining that a first cell accessed by a terminal device is a cell of a mobile relay comprises:
receiving first indication information from the mobile relay or the terminal device, wherein the first indication information indicates that the first cell is a cell having mobility and/or that the mobile relay has mobility.

19. A communication method, applied to a location management function LMF, wherein the LMF serves a terminal device, and the method comprises:
obtaining location information of a mobile relay and positioning measurement data of the terminal device, wherein the mobile relay has mobility, the location information of the mobile relay is used to determine a location of a first cell, the positioning measurement data of the terminal device comprises information about the first cell, and the first cell is a cell of the mobile relay; and
determining a location of the terminal device based on the location information of the mobile relay and the positioning measurement data of the terminal device.

20. The method according to claim 19, wherein the obtaining location information of a mobile relay and positioning measurement data of the terminal device comprises:
receiving, from the terminal device, the location information of the mobile relay and the positioning measurement data of the terminal device.

21. The method according to claim 19, wherein the obtaining location information of a mobile relay and positioning measurement data of the terminal device comprises:
receiving, from an access network device, positioning measurement data of the mobile relay and the positioning measurement data of the terminal device; and
determining the location information of the mobile relay based on the positioning measurement data of the mobile relay.

22. A communication method, applied to a terminal device, wherein the method comprises:
receiving a broadcast message from a cell, wherein the broadcast message comprises first indication information, the first indication information indicates a type of the cell, the type of the cell comprises a cell of a mobile relay or a cell of a non-mobile relay, and the mobile relay has mobility; and
performing positioning measurement based on a signal of a cell whose type is a cell of a non-mobile relay, wherein the positioning measurement excludes a cell whose type is a cell of a mobile relay.

23. A communication apparatus, comprising a unit configured to implement the method according to any one of claims 1 to 22.

24. A communication apparatus, comprising a processor and a memory, wherein the processor is coupled to the memory, and the processor is configured to control the apparatus to implement the method according to any one of claims 1 to 22.

25. A computer-readable storage medium, wherein the storage medium stores a computer program or instructions, and when the computer program or the instructions are executed by a computer, the method according to any one of claims 1 to 22 is implemented.

26. A computer program product, wherein the computer program product comprises instructions, and when the instructions are run by a computer, the method according to any one of claims 1 to 22 is implemented.
